# EUROPÄISCHE PATENTANMELDUNG

(11) **EP 4 036 068 A1**
(43) Veröffentlichungstag der Anmeldung: **03.08.2022**
(21) Anmeldenummer: 22153313.6
(22) Anmeldetag: 25.01.2022
(51) Int. Cl.: C02F 11/13, C01B 3/00, C02F 11/04, C02F 11/06

(54) **VERFAHREN ZUR TROCKNUNG VON KLÄRSCHLAMM**

(30) Priorität: 29.01.2021 DE 102021102123
(71) Anmelder: N-ERGIE Aktiengesellschaft, 90429 Nürnberg (DE)
(72) Erfinder: FLEISCHER, Patrick, 90429 Nürnberg (DE)
(74) Vertreter: Ellwanger, Arndt

(57) **Zusammenfassung**

Die vorliegende Erfindung betrifft ein Verfahren zum Trocknen von Klärschlamm, umfassend zwei Verfahrensschritte. Im ersten Verfahrensschritt wird zunächst Wasserstoff gespeichert, indem Wasserstoff mit einem Träger (T1) in Kontakt gebracht wird, wodurch ein mit Wasserstoff beladener Träger (T2) erhalten und zusätzlich Wärme freigesetzt wird. Im zweiten Verfahrensschritt wird diese freigesetzte Wärme in eine Vorrichtung (V1) eingespeist, um dort Klärschlamm zu trocknen. Der getrocknete Klärschlamm wiederum kann gegebenenfalls verbrannt werden, wobei die Klärschlammverbrennung vorzugsweise räumlich getrennt und/oder zeitlich versetzt von der Klärschlammtrocknung erfolgen kann. Die bei der Klärschlammverbrennung freigesetzte Wärme kann wiederum benutzt werden, um Wasserstoff aus dem im ersten Verfahrensschritt erhaltenen und mit Wasserstoff beladenen Träger (T2) wieder freizusetzen. Dieser freigesetzte Wasserstoff kann wiederum zur Stromerzeugung eingesetzt werden.

## Beschreibung

Die vorliegende Erfindung betrifft ein Verfahren zum Trocknen von Klärschlamm, umfassend zwei Verfahrensschritte. Im ersten Verfahrensschritt wird zunächst Wasserstoff gespeichert, indem Wasserstoff mit einem Träger (T1) in Kontakt gebracht wird, wodurch ein mit Wasserstoff beladener Träger (T2) erhalten und zusätzlich Wärme freigesetzt wird. Im zweiten Verfahrensschritt wird diese freigesetzte Wärme in eine Vorrichtung (V1) eingespeist, um dort Klärschlamm zu trocknen. Der getrocknete Klärschlamm wiederum kann gegebenenfalls verbrannt werden, wobei die Klärschlammverbrennung vorzugsweise räumlich getrennt und/oder zeitlich versetzt von der Klärschlammtrocknung erfolgen kann. Die bei der Klärschlammverbrennung freigesetzte Wärme kann wiederum benutzt werden, um Wasserstoff aus dem im ersten Verfahrensschritt erhaltenen und mit Wasserstoff beladenen Träger (T2) wieder freizusetzen. Dieser freigesetzte Wasserstoff kann wiederum zur Stromerzeugung eingesetzt werden.

EP-A 3 415 609 betrifft ein Verfahren zum Speichern und Lagern von Wasserstoff, umfassend zwei Verfahrensschritte. Im ersten Verfahrensschritt wird der Wasserstoff gespeichert, indem Wasserstoff mit einem Träger (T1) in Kontakt gebracht wird, wodurch ein mit Wasserstoff beladener Träger (T2) erhalten wird. Der Wasserstoff wird dabei vorzugsweise chemisch, insbesondere im Rahmen einer Hydrierung, an den Träger (T1) gebunden. Im zweiten Verfahrensschritt erfolgt die Lagerung des mit Wasserstoff beladenen Träger (T2) in einer Vorrichtung (V1), die Bestandteil einer Biogasanlage ist oder war. Der im Träger (T2) gespeicherte Wasserstoff kann anschließend aus dem Träger (T2) wieder freigesetzt und nachfolgend zur Erzeugung von Strom und gegebenenfalls Wärme verwendet werden. Das in EP-A 3 415 609 beschriebene Verfahren kann in eine bestehende Biogasanlage integriert oder eine Biogasanlage kann entsprechend umgerüstet werden. Weiterhin ist dort ein Verfahren zur Erzeugung von elektrischem Strom und gegebenenfalls von Wärme offenbart, wobei zunächst das Verfahren zum Speichern und Lagern von Wasserstoff durchgeführt wird.

EP-A 3 415 610 betrifft ein Verfahren zur Umrüstung einer Biogasanlage in eine Anlage zum Lagern von Wasserstoff, umfassend mindestens zwei Verfahrensschritte. Im ersten Verfahrensschritt wird das Innere von mindestens einem Fermenter (F1) der Biogasanlage gereinigt. Im optionalen zweiten Verfahrensschritt wird gegebenenfalls mindestens eine Schutzauskleidung im Inneren des gereinigten Fermenters (F1) angebracht. Im dritten Verfahrensschritt wird ein mit Wasserstoff beladener Träger (T2) in den gereinigten Fermenter (F1) eingebracht und gelagert.

Biogasanlagen als solche sind bereits seit langem bekannt (siehe beispielsweise die freie Enzyklopädie Wikipedia unter dem Begriff "Biogasanlage"; https://de.wikipedia.org/wiki/biogasanlage; Version vom 19. April 2017). Eine Biogasanlage dient zur Erzeugung von Biogas durch Vergärung von Biomasse. Biogasanlagen werden in der Regel in landwirtschaftlichen Betrieben eingesetzt, wo beispielsweise tierische Exkremente (Gülle/Festmist) oder Energiepflanzen als Substrat eingesetzt werden. Als Nebenprodukt wird häufig ein als Gärrest bezeichneter Dünger produziert. Das bei der Biogasanlage als Hauptprodukt anfallende Biogas wird häufig zur dezentral gekoppelten Strom- und Wärmeerzeugung (Kraft-Wärme-Kopplung) in Blockheizkraftwerken genutzt. Dabei wird das Biogas, das gegebenenfalls noch getrocknet und/oder entschwefelt wird, einem Gasmotor zugeführt, der das Biogas in elektrischen Strom sowie gegebenenfalls in Wärme verwandelt. Der so produzierte Strom wird in das Netz eingespeist. Meistens erfolgt die Herstellung des elektrischen Stroms aus dem Biogas direkt vor Ort als Bestandteil einer Biogasanlage. Alternativ ist es auch möglich, dass das in einer Biogasanlage erzeugte Biogas auf Erdgasqualität gereinigt und als Biomethan (Bioerdgas) in das Erdgasnetz eingespeist wird.

Zentraler Bestandteil einer solchen Biogasanlage ist in der Regel ein Biogasreaktor, der auch als Fermenter bezeichnet wird (siehe auch Wikipedia; https://de.wikipedia.org/wiki/bioreaktor; Version vom 21. April 2017). In diesem Fermenter wird in Abhängigkeit von der eingebrachten Biomasse durch spezifische biologische Prozesse (Biokonversion, Biokatalyse) das Biogas erzeugt. In der Praxis gibt es zahlreiche Hersteller von solchen Reaktoren/Fermentern, die sich hinsichtlich Größe und Ausstattung sowie Art und Dimension der Zuleitungen der im Fermenter enthaltenen Einbauten, wie Rührwerke oder etwaige vorhandene Heizsysteme im Inneren des Fermenters, unterscheiden. Eine Biogasanlage kann auch zwei oder mehrere Fermenter enthalten. Weitere Fermenter werden auch als Nachgärer bezeichnet/eingesetzt. Weiterhin verfügen Biogasanlagen häufig über zahlreiche Vorrats- oder Lagerbehälter, um beispielsweise die zu vergärende Biomasse oder den Gärrückstand zu lagern. Die einzelnen Vorrichtungselemente einer Bioanlage sind in der Regel durch ein entsprechendes Leitungssystem sowie durch Pumpen miteinander verbunden.

Ein wesentliches Problem von Biogasanlagen ist deren wirtschaftliche Betreibung. Zumindest in Deutschland, aber auch in anderen europäischen Ländern sinngemäß, wird der Betrieb von Biogasanlagen im Rahmen der erneuerbaren Energien wirtschaftlich gefördert. Allerdings sind diese staatlichen Förderungen im Zusammenhang mit der Erzeugung von erneuerbaren Energien nicht unbegrenzt erhältlich, sondern werden in absehbarer Zeit, insbesondere im Zusammenhang mit dem Betrieb von Biogasanlagen, reduziert oder sogar auslaufen. Ohne staatliche Hilfe ist es für viele landwirtschaftliche Betriebe schwierig, insbesondere kleinere Biogasanlagen weiterhin wirtschaftlich zu betreiben. Ein weiteres Problem beim Betreiben von Biogasanlagen ist in der Gefahr von Gasleckagen bzw. dem Wärmeverlust zu sehen. Um das in der Regel brennbare Biogas zu handhaben bzw. zu lagern sind erhöhte Sicherheitsvorkehrungen notwendig.

DE-A 10 2012 005 023 offenbart eine Anordnung sowie ein Verfahren zur autonomen Bereitstellung von Elektrizität über Wasserstoff. Hierbei wird zunächst elektrischer Strom aus einer regenerativen Quelle bereitgestellt, der zur Herstellung von Wasserstoff aus Wasser in mindestens einem Elektrolyseur verwendet wird. Der so hergestellte Wasserstoff wird in einen ersten chemischen Reaktor überführt, der mindestens ein Substrat mit einem ausgedehnten pi-konjugierten System enthält, wobei in diesem ersten chemischen Reaktor eine zumindest teilweise Hydrierung des Substrats durchgeführt wird. Anschließend wird dieses zumindest teilweise hydrierte Substrat in einen Speichertank überführt. Aus diesem Speichertank wird das zumindest teilweise hydrierte Substrat wiederum in einen zweiten chemischen Reaktor überführt, wo eine Dehydrierung dieses Substrates unter Freisetzung von Wasserstoff erfolgt. Dieser im zweiten chemischen Reaktor erzeugte Wasserstoff wird in eine Anlage oder Maschine zur Wandlung des Wasserstoffs in elektrische Energie, vorzugsweise in eine Brennstoffzelle, überführt. Von dort wird elektrischer Strom an den Ort des Bedarfs abgegeben.

Das in DE-A 10 2012 005 023 beschriebene Verfahren bzw. die entsprechende Anlage eignet sich beispielsweise als Notstromaggregat oder an Orten, an denen ein öffentliches Stromnetz fehlt, sowie in Krisensituationen, wie Kriegen. Anwendungsgebiete können Krankenhäuser, chemische Anlagen, Computerzentralen oder auch Kernkraftwerke sein. Letztendlich wird bei diesem Verfahren Wasserstoff zwischengespeichert, was gegebenenfalls auch über einen längeren Zeitraum erfolgen kann, um ihn im Bedarfsfall zur Stromerzeugung einzusetzen. Der anfänglich bereitgestellte elektrische Strom, der aus regenerativen Quellen stammt, mit dem der Wasserstoff erzeugt wird, kann beispielsweise aus Wasserkraft, Windenergie, solarer Strahlung oder auch aus Biogas stammen. Die Durchführung des Verfahrens in Verbindung mit einer Klärschlammtrocknung ist in DE-A 10 2012 005 023 jedoch nicht offenbart.

Ein sinngemäßes Verfahren bzw. eine entsprechende Anordnung ist in DE-A 10 2011 121 704 offenbart. Die Anordnung (Vorrichtung) wird insbesondere zur Pufferung von Überschuss-Elektrizität in Gebäuden eingesetzt. Das entsprechende Verfahren dient zur Energiespeicherung in Gebäuden. Das Verfahren sowie die entsprechende Anordnung erfordern zwingend die Verwendung einer Brennstoffzelle zur Oxidation des in dem zweiten chemischen Reaktor freigesetzten Wasserstoffs unter Freisetzung von Energie.

Verfahren zum Trocknen und/oder Entsorgen von Klärschlamm, beispielsweise durch Verbrennung, sind ebenfalls bereits seit langem bekannt. Hintergrundinformationen zur Beschaffenheit von Klärschlamm sowie der Klärschlammentsorgung in der Bundesrepublik Deutschland können beispielsweise dem Artikel "Klärschlamm-Entsorgung in der Bundesrepublik Deutschland" (Stand: Oktober 2018, herausgegeben vom Bundesumweltamt, erhältlich über das Internet unter: www.umweltbundesamt.de/publikationen) entnommen werden. Weitere Informationen in diesem Zusammenhang können auch dem Artikel "Klärschlammtrocknung in Deutschland - Stand und Perspektiven" von Jürgen Geyer (Seiten 927-948; in Energie aus Abfall - Band 10; TK Verlag Karl Thome-Kozmiensky; Neuruppin 2013) entnommen werden. Eine Verknüpfung von Klärschlammtrocknung mit der Speicherung von Wasserstoff in einem Träger, wobei die bei der Wasserstoffspeicherung freigesetzte Wärme zur Klärschlammtrocknung verwendet wird, ist jedoch weder in den vorgenannten Artikeln noch sonst irgendwo bisher beschrieben worden.

Die der vorliegenden Erfindung zugrunde liegende Aufgabe besteht in der Bereitstellung eines neuen Verfahrens zur Trocknung von Klärschlamm.

Gelöst wird die Aufgabe durch ein Verfahren zur Trocknung von Klärschlamm umfassend die nachfolgenden Schritte a) und b):
a) Inkontaktbringen eines Trägers (T1) mit Wasserstoff zur Speicherung des Wasserstoffs unter Erhalt eines mit Wasserstoff beladenen Trägers (T2) sowie Freisetzung von Wärme,
b) Einspeisung der in Schritt a) freigesetzten Wärme in eine Vorrichtung (V1), um in der Vorrichtung (V1) Klärschlamm zu trocknen.

Ein erster Vorteil des erfindungsgemäßen Verfahrens ist darin zu sehen, dass Energie über einen längeren Zeitraum sicher zwischengespeichert werden. Dieser Vorteil kann sehr anschaulich anhand der nachfolgenden Fallkonstellation verdeutlicht werden. Beispielsweise wird in günstigen Zeiten ein Überschuss an Energie in Form von elektrischem Strom erzeugt. Denkbar sind hier saisonal verteilte windreiche Tage im Zusammenhang mit der Erzeugung von elektrischem Strom durch Windenergie bzw. sonnenreiche Tage, insbesondere während des Sommerhalbjahres, zur Erzeugung von elektrischem Strom, beispielsweise über Photovoltaikanlagen oder Sonnenkollektoren. Der jeweilige Überschuss an Energie, insbesondere an elektrischem Strom, kann beispielsweise in Wasserstoff umgesetzt werden. Erfindungsgemäß wird Wasserstoff, der vorzugsweise wie vorstehend beschrieben aus elektrischen Strom gewonnen werden kann, durch Inkontaktbringen mit einem geeigneten Träger sicher gespeichert, sodass der Wasserstoff bzw. indirekt die Energie über einen längeren Zeitraum gelagert werden kann. Im Bedarfsfall, also bei einem plötzlich eintretenden erhöhten bzw. kontinuierlichen Bedarf an elektrischer Energie, kann der so zwischengespeicherte Wasserstoff bzw. die zwischengespeicherte Energie wieder in elektrischen Strom oder gegebenenfalls in Wärme rückgewandelt bzw. umgewandelt werden.

Ein wesentlicher Vorteil des erfindungsgemäßen Verfahrens ist darin zu sehen, dass die bei der vorstehend beschriebenen saisonalen Speicherung von elektrischem Strom in Folge der exothermen Einspeicherung von Wasserstoff freiwerdende Energie wiederverwendet werden kann. Dies ist insbesondere dann ein großer Vorteil, wenn das Ein- und Ausspeichern von Wasserstoff, insbesondere bei dem nachstehend beschriebenen bevorzugten LOHC-Verfahren, entweder räumlich und/oder zeitlich getrennt voneinander erfolgen. Die Zwischenspeicherung der bei der Wasserstoffspeicherung infolge des erfindungsgemäßem Schritts a) freiwerdenden Energie ist generell schwierig bzw. mit relativ hohen Verlusten verbunden, insbesondere dann, wenn besagte Energie für einen längeren Zeitraum zwischengespeichert werden soll.

Die erfindungsgemäße Ankopplung einer Wasserstoffspeicherung gemäß Schritt a), insbesondere im Rahmen eines LOHC-Prozesses, an eine Klärschlammtrocknung gemäß Schritt b) bzw. die Kopplung an eine Klärschlammverbrennungsanlage ist somit in mehrfacher Hinsicht vorteilhaft. Einerseits kann (wie bereits beschrieben) die bei der Einspeicherung (Hydrierung) von Wasserstoff in einen geeigneten Träger, insbesondere eine LOHC-Flüssigkeit (bzw. in einem LOHC-Verfahren), entstehende Wärme im Prozess der Klärschlammtrocknung effizient genutzt werden. Darüber hinaus kann in einem nachfolgenden Verfahrensschritt die Wärme aus der thermischen Verwertung des Klärschlamms, also insbesondere bei einer Klärschlammverbrennung, in einem nachfolgenden Dehydrierungsprozess des eingesetzten mit Wasserstoff beladenen Trägers, insbesondere einer Dehydrierung im LOHC-Verfahren, erfolgreich eingesetzt werden, weil es sich bei der Dehydrierung um einen endothermen Vorgang handelt, der die Einspeisung von Wärme erfordert.

Das erfindungsgemäße Verfahren kann in den einzelnen nachfolgend beschriebenen Ausführungsformen in mehrfacher Hinsicht sowohl zeitlich versetzt und/oder räumlich getrennt voneinander durchgeführt werden. Letztendlich können die eingesetzten Träger, insbesondere LOHC-Flüssigkeiten, mehrfach mit Wasserstoff beladen und anschließend wieder entladen werden. Die jeweils benötigte oder freigesetzte Energie kann ebenfalls in einem Kreislauf und/oder räumlich bzw. zeitlich versetzt eingesetzt werden.

Ein weiterer Vorteil des erfindungsgemäßen Verfahrens ist darin begründet, dass in einer bevorzugten Ausführungsform die jeweilige Infrastruktur der in Deutschland bzw. Europa zahlreich vorhandenen Biogasanlagen verwendet werden kann, um das erfindungsgemäße Verfahren durchzuführen. Dadurch können die Anfangsinvestitionskosten gegenüber einem kompletten Neubau/dem Kauf einer kompletten neuen Anlage deutlich reduziert werden. Wesentliche Vorrichtungskomponenten jeder gängigen Biogasanlage können für das erfindungsgemäße Verfahren verwendet werden, ohne dass dabei Kosten im großen Umfang im Zusammenhang mit der Umrüstung einzelner Vorrichtungselemente einer Biogasanlage anfallen müssen. Weiterhin können Vorrichtungselemente, die entweder direkt zur Biogasanlage gehören oder ihr unmittelbar angeschlossen sind, wie beispielsweise ein Netzanschluss, ein Transformator, ein Blockheizkraftwerk oder ein darin enthaltener Gasmotor, auch ohne weitere Umrüstung direkt im erfindungsgemäßen Verfahren sinngemäß zum Betrieb bei einer Biogasanlage mit nachfolgender Stromerzeugung verwendet werden.

Ebenfalls ist es als vorteilhaft anzusehen, dass das erfindungsgemäße Verfahren auch parallel und/oder zeitversetzt zum herkömmlichen Betrieb einer Biogasanlage durchgeführt werden kann. So ist es denkbar, dass zusätzlich zum bisherigen "konventionellen Betrieb" einer Biogasanlage entsprechende Vorrichtungselemente ergänzt werden, um das erfindungsgemäße Verfahren parallel oder zeitversetzt zur eigentlichen Produktion von Biogas bzw. der nachfolgenden Strom- oder Wärmeerzeugung durchgeführt wird. Bei dieser Verfahrensvariante ist es weiterhin vorteilhaft, wenn der aus elektrischem Strom erzeugte Wasserstoff zumindest teilweise zur Erzeugung von Biogas, insbesondere im Rahmen einer Methanisierung, eingesetzt wird.

Alternativ ist es selbstverständlich auch möglich, dass eine bisher konventionell genutzte Biogasanlage vollumfänglich zur Durchführung des erfindungsgemäßen Verfahrens umgerüstet wird. Dies ist insbesondere im Fall von kleineren Biogasanlagen, die im landwirtschaftlichen Bereich betrieben werden, von Interesse, weil deren wirtschaftliche Betreibung aufgrund des zumindest in Deutschland mittlerweile erfolgten Endes der wirtschaftlichen Förderung solcher Biogasanlagen sehr schwierig bis unmöglich ist.

Im Rahmen der vorliegenden Erfindung hat der Begriff "in räumlicher Nähe" (sofern nachfolgend nicht anders definiert) die folgende Bedeutung: die jeweiligen Schritte werden auf demselben Betriebsgelände (oder auf einem angrenzenden Betriebsgelände) durchgeführt, vorzugsweise in einem (räumlichen) Abstand von maximal 1 km, mehr bevorzugt in einem Abstand von maximal 500 m, insbesondere in einem Abstand von maximal 100 m (bzw. die entsprechenden Vorrichtungen zur Durchführung dieser Schritte befinden sich in den entsprechenden Abständen). Sofern im Rahmen der vorliegenden Erfindung konkrete Zahlenwerte für einen Abstand angegeben wird, beziehen sich die jeweiligen Abstandsangaben auf die Luftlinie.

Im Rahmen der vorliegenden Erfindung hat der Begriff "räumlich getrennt voneinander" (sofern nachfolgend nicht anders definiert) die folgende Bedeutung: die jeweiligen Schritte werden nicht auf demselben Betriebsgelände (oder auf einem angrenzenden Betriebsgelände) durchgeführt, vorzugsweise in einem (räumlichen) Abstand von mindestens 5 km, mehr bevorzugt in einem Abstand von 10-50 km (bzw. die entsprechenden Vorrichtungen zur Durchführung dieser Schritte befinden sich in den entsprechenden Abständen). Erfindungsgemäß ist es prinzipiell möglich, dass die entsprechenden Schritte, die in einem räumlichen Abstand durchgeführt werden sollen, in deutlich größeren Abständen durchgeführt werden, beispielsweise in einem Abstand von mehreren 100 km oder sogar mehr als 1000 km. Sinngemäßes gilt für Begriffe wie "in räumlichem Abstand", "in räumlicher Distanz" oder "räumlich versetzt".

Im Rahmen der vorliegenden Erfindung hat der Begriff "in zeitlicher Nähe" (sofern nachfolgend nicht anders definiert) die folgende Bedeutung: die jeweiligen Schritte werden vorzugsweise parallel, also zur gleichen Uhrzeit, durchgeführt, insbesondere wenn sie auf demselben Betriebsgelände durchgeführt werden. Gegebenenfalls können die jeweiligen Schritte auch mit einer gewissen zeitlichen Verzögerung zueinander durchgeführt werden, vorzugsweise in einem (zeitlichen) Abstand von maximal 1 Tag, mehr bevorzugt in einem Abstand von maximal 6 Stunden, insbesondere in einem Abstand von maximal 1 Stunde (bzw. die entsprechenden Vorrichtungen zur Durchführung dieser Schritte werden im entsprechenden Zeitrahmen eingesetzt). Sinngemäßes gilt für Begriffe wie "in direkter zeitlicher Abfolge".

Im Rahmen der vorliegenden Erfindung hat der Begriff "zeitlich getrennt voneinander" (sofern nachfolgend nicht anders definiert) die folgende Bedeutung: die jeweiligen Schritte werden nicht parallel, also nicht zur gleichen Uhrzeit, durchgeführt, insbesondere werden sie nicht auf demselben Betriebsgelände durchgeführt. Stattdessen werden die jeweiligen Schritte mit einer zeitlichen Verzögerung zueinander durchgeführt, die mindestens einen Tag beträgt. Vorzugsweise beträgt der (zeitliche) Abstand zwischen der Durchführung der jeweiligen Schritte mindestens einen Monat, besonders bevorzugt mindestens drei Monate (bzw. die entsprechenden Vorrichtungen zur Durchführung dieser Schritte werden im entsprechenden Zeitrahmen eingesetzt). Erfindungsgemäß ist es prinzipiell möglich, dass die entsprechenden Schritte die in einem zeitlichen Abstand durchgeführt werden sollen, in deutlich größeren zeitlichen Abständen durchgeführt werden, beispielsweise in einem Abstand von mehreren Monaten oder sogar mehreren Jahren. Sinngemäßes gilt für Begriffe wie "in zeitlichem Abstand", "in zeitlicher Distanz" oder "zeitlich versetzt".

Nachfolgend wird das erfindungsgemäße Verfahren zur Trocknung von Klärschlamm sowie die gegebenenfalls zusätzliche Erzeugung von elektrischem Strom und/oder von Wärme näher erläutert.

Der erste Gegenstand der vorliegenden Erfindung ist ein Verfahren zur Trocknung von Klärschlamm, wobei das Verfahren die Schritte a) und b) umfasst.

In Verfahrensschritt a) erfolgt ein Inkontaktbringen eines Trägers (T1) mit Wasserstoff zur Speicherung des Wasserstoffs unter Erhalt eines mit Wasserstoff beladenen Trägers (T2) sowie Freisetzung von Wärme.

Als Träger (T1) kann prinzipiell jeder beliebige, dem Fachmann bekannte Träger verwendet werden, der dazu geeignet ist, Wasserstoff in irgendeiner Form zu speichern. Weiterhin ist erfindungsgemäß der Träger (T1) dazu in der Lage, den Wasserstoff reversibel zu speichern. Dies bedeutet, dass aus dem mit Wasserstoff beladenen Träger (T2), der durch Inkontaktbringen des Wasserstoffs mit dem Träger (T1) erhalten wird, der Wasserstoff zu einem späteren Zeitpunkt (und unabhängig von der Durchführung des Verfahrensschritts b)) wieder freigesetzt werden kann und dabei der ursprünglich eingesetzte Träger (T1) wiedergewonnen wird.

Das Speichern des Wasserstoffs kann beispielsweise so durchgeführt werden, dass Wasserstoff chemisch oder physisorptiv, vorzugsweise chemisch, an den Träger (T1) gebunden wird. Im Rahmen der vorliegenden Erfindung ist es jedoch erforderlich, dass das Speichern des Wasserstoffs reversibel möglich ist. Insbesondere Kohlendioxid, das chemisch mit Wasserstoff unter Erhalt von Methan reagieren kann, ist kein Träger (T1) im Sinne der vorliegenden Erfindung, weil aus Methan nicht direkt und/oder auf einfachem Wege reversibel Wasserstoff freigesetzt sowie Kohlendioxid wiedergewonnen werden kann. Folglich ist Methan auch kein mit Wasserstoff beladener Träger (T2) im Sinne der vorliegenden Erfindung.

Eine chemische Bindung des Wasserstoffs an den Träger (T1) kann beispielsweise dadurch erfolgen, dass der Träger (T1) ein Metallhydridspeicher ist, der ein aus einer Metalllegierung hergestelltes Material enthält, das Wasserstoff aufnimmt und chemisch bindet. Alternativ kann der Träger (T1) auch eine, vorzugsweise flüssige, organische Verbindung sein. Solche organischen Verbindungen werden auch als Wasserstoffträger oder LOHC (englisch für: liquid organic hydrogen carriers) bzw. organische Hydride bezeichnet. Solche Wasserstoffträger (LOHC) sind dem Fachmann bekannt und beispielsweise in DE-B 10 2013 223 589, EP-A 1 475 349 und DE-A 10 2012 005 023 beschrieben.

Diese Form der Wasserstoffspeicherung unter Verwendung der LOHCs hat den besonderen Vorteil, dass der LOHC-Träger (T1) in der Regel unter den verwendeten Prozessbedingungen in flüssiger Form vorliegt. Die physiochemischen Eigenschaften eines solchen LOHC-Trägers haben hohe Ähnlichkeit zu herkömmlichen flüssigen Kraftstoffen, sodass Pumpen zum Transport oder Behälter zur Lagerung aus dem Bereich der Kunststoff- und Printstofflogistik genutzt werden können. Die Wasserstoffspeicherung in chemisch gebundener Form in einer organischen Flüssigkeit wie LOHC erlaubt eine drucklose Lagerung bei Normalbedingungen über große Zeiträume ohne signifikanten Wasserstoffverlust. Sofern es sich bei dem Träger (T1) um einen LOHC-Träger handelt, liegt der Träger zur Aufnahme von Wasserstoff in seiner vollständig oder zumindest teilweise dehydrierten Form vor. Vorzugsweise handelt es sich dabei um die vollständig dehydrierte Form. Eine zumindest teilweise dehydrierte Form kann dann vorliegen, wenn beispielsweise eine vollständig dehydrierte Form eines solchen Trägers über zwei oder mehrere Stellen verfügt, an denen das entsprechende Molekül hydriert werden kann, und mindestens eine dieser zur Hydrierung geeigneten Stellen bereits in hydrierter Form vorliegt, aber noch mindestens eine Stelle in dehydrierter (nicht hydrierter) Form vorliegt. Beispiele hierfür sind unter anderem aromatische Verbindungen, insbesondere polyzyklische aromatische Verbindungen mit einem konjugierten π-Elektronensystem.

Das Inkontaktbringen des Trägers (T1) mit Wasserstoff kann prinzipiell nach beliebigen, dem Fachmann bekannten Methoden durchgeführt werden, beispielsweise indem Wasserstoff über den Träger (T1) übergeleitet wird, durch den Träger (T1) durchgeleitet wird oder auf den Träger (T1) aufgepresst wird.

Durch das Inkontaktbringen des Trägers (T1) mit Wasserstoff wird in Schritt a) des erfindungsgemäßen Verfahrens somit ein mit Wasserstoff beladener Träger (T2) erhalten. Sowohl der Träger (T1) als auch der durch Inkontaktbringen mit Wasserstoff erhaltene mit Wasserstoff beladene Träger (T2) können als Gemisch von zwei oder mehreren Trägern (T1) und/oder (T2) vorliegen. Sofern der Wasserstoff chemisch an den Träger (T1) gebunden wird, handelt es sich dabei um eine vollständige oder zumindest teilweise Hydrierung des entsprechenden Trägers (T1), sodass sich der mit Wasserstoff beladene Träger (T2) chemisch vom entsprechenden unbeladenen Träger (T1) unterscheidet. Vorzugsweise handelt es sich dabei um eine vollständige Hydrierung des Trägers (T1) mit Wasserstoff unter Erhalt des mit Wasserstoff beladenen Trägers (T2).

Das Verhältnis der Träger (T1) und (T2) im erfindungsgemäßen Verfahren gemäß Schritt a) wird nachfolgend an dem aus dem Stand der Technik bekannten LOHC-Träger Toluol erläutert. Toluol enthält einen Benzolring und somit drei π-Elektronenpaare. Toluol stellt also einen Träger (T1) dar, der in seiner vollständig dehydrierten Form vorliegt. Durch Inkontaktbringen des Toluols mit Wasserstoff wird erfindungsgemäß eine zumindest teilweise oder vorzugsweise vollständige Hydrierung von Toluol zu Methylcyclohexan als Träger (T2) erzielt. Sofern die vollständige Hydrierung von Toluol durchgeführt wird, werden also alle drei π-Elektronenpaare des Toluols hydriert, sodass Methylcyclohexan die vollständig hydrierte Form des Toluols darstellt. Sofern nur ein oder zwei der π-Elektronenpaare des Toluols hydriert worden sind, handelt es sich nur um eine teilweise Hydrierung. Solche zumindest teilweise hydrierten Verbindungen können sowohl als Träger (T1) oder als Träger (T2) erfindungsgemäß eingesetzt werden.

Normalerweise ist der Träger (T1) eine ungesättigte Verbindung, bevorzugt eine Verbindung mit mindestens einer Kohlenstoff-Kohlenstoff-Doppelbindung, mehr bevorzugt eine aromatische oder hetero-aromatische Verbindung, noch mehr bevorzugt ein N-Alkylcarbazol, Toluol, Dibenzyltoluol, Benzyltoluol, Naphthalin oder ein Azaborin, besonders bevorzugt Dibenzyltoluol.

Bei Verbindungen mit mindestens einer Kohlenstoff-Kohlenstoff-Doppelbindung (C-C-Doppelbindung) kann es sich beispielsweise um ein Olefin, einen Aromaten oder einen Heteroaromaten handeln. Solche Verbindungen sind dem Fachmann prinzipiell bekannt. Diese Verbindungen können gegebenenfalls substituiert sein, beispielsweise durch eine oder mehrere Alkylgruppen von beliebiger Kettenlänge, wie Methyl, Ethyl, Propyl oder durch sonstige funktionelle Gruppen, wie Halogen, Amino oder Carboxyl. Heteroaromatische Verbindungen weisen als Heteroatom mindestens ein Heteroatom auf, das vorzugsweise Sauerstoff, Stickstoff und/oder Schwefel ist. Aromatische oder heteroaromatische Verbindungen können monozyklisch, bizyklisch oder gegebenenfalls polyzyklisch sein. Gegebenenfalls können die entsprechenden Zyklen (Ringe) zumindest teilweise auch in hydrierter Form vorliegen. Ebenso ist es denkbar, dass beispielsweise bei einer bizyklischen Verbindung einer der beiden Zyklen vollständig hydriert ist.

Sofern als Träger (T1) ein N-Alkylcarbazol eingesetzt wird, kann der an das Stickstoffatom gebundene Alkylrest eine beliebige Kettenlänge annehmen, beispielsweise kann es sich dabei um Methyl, Ethyl, Propyl, Isopropyl oder Butyl sowie gegebenenfalls Mischungen davon handeln. Vorzugsweise handelt es sich dabei um N-Ethylcarbazol.

Demzufolge wird im erfindungsgemäßen Verfahren in Schritt a) vorzugsweise die entsprechende teilweise oder insbesondere vollständig hydrierte Form der vorstehend definierten konkreten Träger (T1) als mit Wasserstoff beladener Träger (T2) erhalten.

Prinzipiell ist es möglich, dass Schritt a) in der gleichen Vorrichtung (V4) durchgeführt wird wie die nachfolgend näher definierte Lagerung des mit Wasserstoff beladenen Trägers (T2). Dies kann erfolgen, wenn beispielsweise in eine solche Vorrichtung (V4) eine spezielle Einheit/Vorrichtungsbestandteil integriert wird, der die Durchführung des Verfahrensschritts a) getrennt von der Durchführung der Lagerung des mit Wasserstoff beladenen Trägers (T2) ermöglicht. Entsprechende Einheiten oder Einbaumaßnahmen sind dem Fachmann bekannt. Vorzugsweise wird jedoch im erfindungsgemäßen Verfahren Schritt a) in einer separaten Vorrichtung (V8) durchgeführt, die vorzugsweise ein chemischer Reaktor ist.

Vorzugsweise wird Schritt a) in einer druckstabilen Vorrichtung, insbesondere in einem druckstabilen chemischen Reaktor, durchgeführt. Weiterhin ist es bevorzugt, dass Schritt a) bei einer Temperatur zwischen 50°C und 400°C, insbesondere zwischen 120°C und 300°C, insbesondere zwischen 150°C und 280°C durchgeführt wird. Die Hydrierung, also das Beladen des Trägers (T1) mit Wasserstoff, findet vorzugsweise bei einem Verfahrensdruck von 2 bar bis 200 bar, insbesondere bei 10 bar bis 100 bar, statt. Weiterhin ist es bevorzugt, dass Schritt a) in Gegenwart eines metallhaltigen Katalysators durchgeführt wird. Als Katalysatoren für die Beladung des LOHC-Trägers (T1) eignen sich insbesondere solche, die das Element Ruthenium und/oder Nickel aufweisen. Es sind auch Katalysatoren möglich, die andere Elemente oder zusätzliche Elemente neben Ruthenium und/oder Nickel aufweisen. Wesentlich sind solche Elemente, die Wasserstoff anlagern und auf LOHC-Träger (T1) übertragen können. Neben Ruthenium und/oder Nickel sind insbesondere Metalle wie Chrom, Eisen, Kobalt, Kupfer, Iridium, Palladium oder Platin als Katalysatoren möglich.

Wie vorstehend bereits erwähnt wird im erfindungsgemäßen Schritt a) zusätzlich Wärme freigesetzt aufgrund der exothermen Speicherung des Wasserstoffs durch Inkontaktbringen mit dem Träger (T1).

In Verfahrensschritt b) erfolgt wiederum eine Einspeisung der in Schritt a) freigesetzten Wärme in eine Vorrichtung (V1), um in der Vorrichtung (V1) Klärschlamm zu trocknen.

Die Durchführung einer Klärschlammtrocknung als solcher ist einem Fachmann bekannt. Sinngemäßes gilt auch für die (chemische) Beschaffenheit von Klärschlamm als solchen, geeigneten Vorrichtungen zur Durchführung der Klärschlammtrocknung und/oder für die Aufarbeitung/Weiterverwendung von getrocknetem Klärschlamm, beispielsweise durch Verbrennen von Klärschlamm. Hintergrundinformationen in diesem Kontext können beispielsweise den eingangs erwähnten Artikeln "Klärschlamm-Entsorgung in der Bundesrepublik Deutschland" (Stand: Oktober 2018, herausgegeben vom Bundesumweltamt, erhältlich über das Internet unter: www.umweltbundesamt.de/publikationen) oder "Klärschlammtrocknung in Deutschland - Stand und Perspektiven" von Jürgen Geyer (Seiten 927-948; in Energie aus Abfall - Band 10; TK Verlag Karl Thome-Kozmiensky; Neuruppin 2013) entnommen werden.

Als Vorrichtung (V1) kommen prinzipiell alle dem Fachmann bekannten Vorrichtungen infrage, mit denen Klärschlamm durch Wärmezufuhr getrocknet werden kann. Die Vorrichtung (V1) umfasst mindestens einen Klärschlammtrockner. Gegebenenfalls können in der Vorrichtung (V1) auch zwei oder mehr Klärschlammtrockner enthalten sein, die beispielsweise parallel oder in Reihe geschaltet betrieben werden, und/oder sonstige Behältnisse, beispielsweise ein oder mehrere Vorrat-Tanks zur Lagerung von Klärschlamm-Chargen in unterschiedlichen Trockenstufen. Weiterhin kann die Vorrichtung (V1) auch an einen oder mehrere Wärmetauscher angeschlossen sein bzw. solche Wärmetauscher können in die Vorrichtung (V1) integriert sein.

Vorzugsweise ist die Vorrichtung (V1) mindestens ein Klärschlammtrockner ausgewählt aus einem Bandtrockner, einem Trommeltrockner oder einem Scheibentrockner. Solche Klärschlammtrockner sind kommerziell erhältlich, beispielsweise unter der Bezeichnung "Huber Bandtrockner BT" der Firma Huber SE (Berching, Deutschland).

Die in Schritt a) freigesetzte Wärme kann beispielsweise über eine Rohrleitung oder ein Rohrleitungssystem in die Vorrichtung (V1) geleitet werden. Um den Wärmetransport von Schritt a) nach Schritt b) möglichst effizient zu gestalten, ist es vorteilhaft, wenn dabei Wärmetauscher eingesetzt werden.

Im Rahmen der vorliegenden Erfindung ist es somit bevorzugt, dass in Schritt b)
i) die Vorrichtung (V1) mindestens einen Klärschlammtrockner umfasst ausgewählt aus einem Bandtrockner, einem Trommeltrockner oder einem Scheibentrockner, und/oder
ii) die in Schritt a) freigesetzte Wärme über eine Rohrleitung oder ein Rohrleitungssystem in die Vorrichtung (V1) geleitet wird, und/oder
iii) die in Schritt a) freigesetzte Wärme durch einen Wärmetauscher geleitet wird, um die Trocknungsluft in der Vorrichtung (V1), insbesondere in einem Bandtrockner, aufzuheizen, und/oder
iv) die Vorrichtung (V1) mindestens zwei Bereiche mit unterschiedlichen Temperaturzonen aufweist.

Aufgrund des im erfindungsgemäßen Verfahren stattfindenden Wärmetransports von Schritt a) und Schritt b) ist es vorteilhaft, wenn die beiden Schritte in räumlicher Nähe voneinander durchgeführt werden, also die jeweiligen Vorrichtungen zur Durchführung dieser Schritte vorzugsweise nicht weit voneinander entfernt aufgestellt sind. Abstände von beispielsweise 500 m bis 1 km zwischen den jeweiligen Vorrichtungen zur Durchführung der beiden Schritte a) und b) sind in der Praxis problemlos zu bewältigen.

Zwar ist es denkbar bzw. technisch realisierbar, dass sich die jeweiligen Vorrichtungen zur Durchführung der beiden Schritte auch im einen größeren räumlichen Abstand zueinander finden, jedoch ist der Energieverlust umso größer, je weiter dieser Abstand zwischen den jeweiligen Vorrichtungen zur Durchführung der beiden Schritte a) und b) ist. Durch entsprechend ausgestaltete Rohrleitungen, beispielsweise spezielle isolierte Rohrleitungen, können auch größere Abstände überwunden werden, ohne dass es zu einem signifikanten Wärmeverlust kommen muss. Dies ist aber insofern mit einem Nachteil verbunden, weil dadurch die Installationskosten wieder ansteigen. Denkbar ist, dass sich die jeweiligen Vorrichtungen auf unterschiedlichen Betriebsgelände in näherer räumlicher Umgebung befinden.

Im Rahmen der vorliegenden Erfindung ist es weiterhin bevorzugt, dass die beiden Schritte a) und b) in zeitlicher Nähe, beispielsweise parallel zueinander, durchgeführt werden. Technisch ist es auch möglich, dass die freigesetzte Wärme zwischengelagert wird und die beiden Schritte zeitlich versetzt zueinander durchgeführt werden.

Vorteilhaft bei der Durchführung des erfindungsgemäßen Schritts b) ist es weiterhin, wenn die Einspeisung der in Schritt a) freigesetzten Wärme in die Vorrichtung (V1) so erfolgt, dass die Vorrichtung (V1) mindestens zwei Bereiche mit unterschiedlichen Temperaturzonen aufweist. Die Vorrichtung (V1) kann dabei zwei oder mehrere Temperaturzonen aufweisen, die beispielsweise dadurch gesteuert werden, dass die Wärme an unterschiedlichen Stellen und/oder in unterschiedlichen Mengen und/oder durch Verwendung von Wärmetauschern in die Vorrichtung (V1) eingespeist wird. Beispielsweise kann die Vorrichtung (V1) mindestens eine Niedertemperaturzone und/oder mindestens eine Hochtemperaturzone umfassen. Die entsprechenden Temperaturbereiche, die zur Trocknung von Klärschlamm in der Vorrichtung (V1) in den jeweiligen Zonen oder Bereiche der entsprechenden Vorrichtung eingestellt werden können, sind dem Fachmann bekannt.

Bevorzugt ist es, dass die Vorrichtung (V1) a) eine Niedertemperaturzone (Z1) umfasst, die bei einem Temperaturniveau von 50 bis 90 °C, vorzugsweise bei 60 bis 80 °C, insbesondere bei 70 °C, betrieben wird, und b) eine Hochtemperaturzone (Z2) umfasst, die bei einem Temperaturniveau von 100 bis 180 °C, vorzugsweise bei 130 bis 150 °C, insbesondere bei 140 °C, betrieben wird.

Durch entsprechende Regulierung der Wärmeeinspeisung in die Vorrichtung (V1) und/oder die Verweildauer des Klärschlamms in der Vorrichtung (V1) kann der Fachmann den Trocknungsgrad des Klärschlamms in Schritt b) steuern. Ebenso weiß der Fachmann, dass der Wassergehalt des zu trocknenden Klärschlamms und/oder dessen chemische Zusammensetzung die Trocknungsdauer und/oder den Trocknungsgrad des Klärschlamms in Schritt b) beeinflussen können. Der Fachmann weiß aufgrund seines Fachwissens und/oder gegebenenfalls unter Zuhilfenahme der vorstehend zu Beginn der Ausführungen zu Schritt b) aufgeführten Literaturstellen, wie für die unterschiedlichen Arten von Klärschlamm der gewünschte bzw. ein hoher Trocknungsgrad eingestellt werden kann.

Sofern nichts anderes angegeben, wird die Trocknung des Klärschlamms im Rahmen der vorliegenden Erfindung in Prozent angegeben und bezieht sich auf den Trockenrückstand (TR). Dieser ist als Maß für den Gehalt an Feststoff der nicht abfiltrierten Schlammprobe bzw. den Anteil der Trockenmasse an der gesamten Schlammmasse definiert. Die Bestimmung erfolgt durch Verdampfung des Wassers (siehe auch Tab. 1 auf Seite 7 des vorstehend erwähnten Artikels "Klärschlamm-Entsorgung in der Bundesrepublik Deutschland").

Vorzugsweise wird in Schritt b) getrockneter Klärschlamm erhalten, der in der Vorrichtung (V1) bis zu einem Trocknungsgrad von mindestens 75 %, vorzugsweise bei mindestens 85 %, insbesondere bei 95 bis 100 % (Volltrocknung) getrocknet wird.

Im Rahmen der vorliegenden Erfindung ist es somit weiterhin bevorzugt, dass
i) Schritt a) und Schritt b) in räumlicher Nähe durchgeführt werden, vorzugsweise befinden sich die jeweiligen Vorrichtungen zur Durchführung der beiden Schritte a) und b) auf demselben Betriebsgelände, und/oder
ii) die Vorrichtung (V1) umfasst a) eine Niedertemperaturzone (Z1), die bei einem Temperaturniveau von 50 bis 90 °C, vorzugsweise bei 60 bis 80 °C, insbesondere bei 70 °C, betrieben wird, und b) eine Hochtemperaturzone (Z2), die bei einem Temperaturniveau von 100 bis 180 °C, vorzugsweise bei 130 bis 150 °C, insbesondere bei 140 °C, betrieben wird, und/oder
iii) der Klärschlamm in der Vorrichtung (V1) bis zu einem Trocknungsgrad von mindestens 75 %, vorzugsweise bei mindestens 85 %, insbesondere bei 95 bis 100 % (Volltrocknung) getrocknet wird.

Wie bereits erwähnt, kann der in der Vorrichtung (V1) zu trocknende Klärschlamm über eine beliebige, dem Fachmann bekannte chemische Zusammensetzung verfügen und/oder beliebige Trocknungsgrade aufweisen. Der zu trocknende Klärschlamm wird auch als nasser Klärschlamm oder gegebenenfalls auch als Dünnschlamm bezeichnet. Beispielsweise kann im Rahmen der Erfindung der nasse Klärschlamm zunächst einer Vortrocknung unterzogen worden sein, um zunächst den Wassergehalt in einer Vorstufe zu reduzieren. Dies wird auch als Entwässerung von Klärschlamm bezeichnet, wodurch ein (nasser) Klärschlamm mit einem Trocknungsgrad von 20 bis 30 % erhalten werden. Diese Entwässerung des Klärschlamms in einer Vorstufe kann beispielsweise mit einer Schneckenpresse erfolgen, die beispielsweise kommerziell erhältlich ist unter der Bezeichnung "Huber Schneckenpresse Q-Press" der Firma Huber SE (Berching, Deutschland).

Weiterhin kann der nasse Klärschlamm zunächst in einer separaten Vorrichtung zwischengelagert werden bevor er in die Vorrichtung (V1) zur Durchführung des erfindungsgemäßen Schritt e) eingespeist wird. Ebenso ist es denkbar, dass nasser Klärschlamm beispielsweise von einem Lkw angeliefert wird und direkt an die Vorrichtung (V1) eingespeist wird. Die Zwischenlagerung des nassen Klärschlamms kann beispielsweise auch in einem Fermenter, einem Nachgärer Gehrer oder einer Gärresteanlage erfolgen. Die Lagerung und/oder der Transport und/oder die Überführung von nassem Klärschlamm ist ein Fachmann bekannt, beispielsweise kann durch Zuhilfenahme von speziellen Pumpen nasser Klärschlamm in die Vorrichtung (V1) aus einem entsprechenden Vorratsbehälter eingespeist werden.

Im Rahmen der vorliegenden Erfindung ist es somit weiterhin bevorzugt, dass
i) der Klärschlamm zunächst entwässert wird und mit einem Trocknungsgrad von 20 bis 30 % vorliegt, bevor er in die Vorrichtung (V1) zur Trocknung eingespeist wird, und/oder
ii) der Klärschlamm mit einer Dickstoffpumpe in die Vorrichtung (V1) zur Trocknung eingespeist wird, und/oder
iii) der Klärschlamm vor der Trocknung in der Vorrichtung (V1) in einer Vorrichtung (V2) gelagert wird, vorzugsweise ist die Vorrichtung (V2) ausgewählt aus einem Tank, einem Fermenter oder einem Behältnis, das durch Umrüsten einer Biogasanlage, insbesondere durch Umrüstung eines Fermenters, erhalten wurde oder das Bestandteil einer Biogasanlage ist.

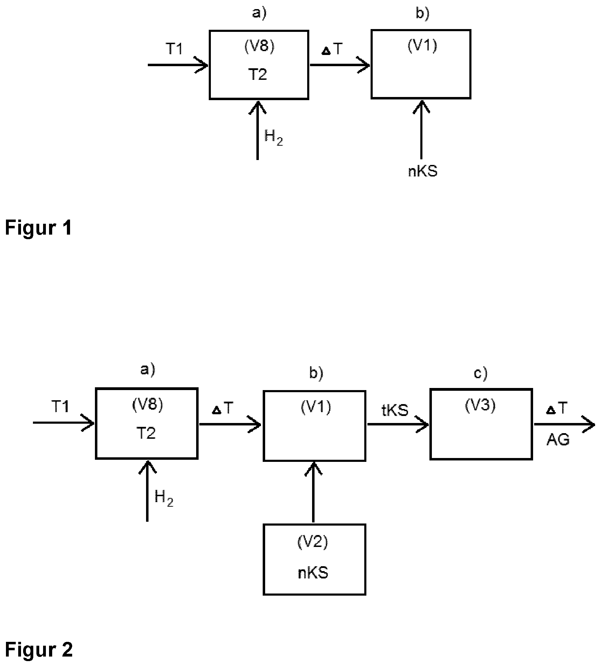

Figur 1 verdeutlicht das erfindungsgemäße Verfahren in seiner breitesten Form unter Berücksichtigung der Schritte a) und b). Zunächst wird gemäß Schritt a) in der Vorrichtung (V8), die vorzugsweise ein chemischer Reaktor ist, Wasserstoff mit einem geeigneten Träger (T1), vorzugsweise ist der Träger (T1) ein Wasserstoffträger (LOHC), in Kontakt gebracht, wodurch der Wasserstoff gespeichert wird, vorzugsweise durch chemische Bindung an den Träger (T1), insbesondere durch Hydrierung, wodurch ein mit Wasserstoff beladener Träger (T2) erzeugt wird. Der mit Wasserstoff beladene Träger (T2) kann in der Vorrichtung (V8) verbleiben, vorzugsweise wird der Träger (T2) jedoch zur Lagerung in eine separate Vorrichtung überführt. Die einzelnen Schritte und/oder das gesamte Verfahren kann sowohl batchweise als auch kontinuierlich betrieben werden. Die bei der Speicherung des Wasserstoffs in Schritt a) freigesetzte Wärme wird nach Schritt b) transportiert.

In Schritt b) erfolgt die Einspeisung der in Schritt a) freigesetzten Wärme in eine Vorrichtung (V1), um in der Vorrichtung (V1) Klärschlamm zu trocknen. Die Vorrichtung (V1) umfasst in der Regel mindestens einen Klärschlammtrockner, vorzugsweise ausgewählt aus einem Bandtrockner, einem Trommeltrockner oder einem Scheibentrockner. Der nasse Klärschlamm (nKS) wird ebenfalls in die Vorrichtung (V1) eingespeist, wo dieser durch Wärmezufuhr unter Erhalt von getrocknetem Klärschlamm getrocknet wird. Der getrocknete Klärschlamm (tKS) kann gegebenenfalls in der Vorrichtung (V1) verbleiben, vorzugsweise wird der getrocknete Klärschlamm (tKS) jedoch weiterverarbeitet und/oder eine andere Vorrichtung transportiert. Die Vorrichtungen (V8) und (V1) befinden sich vorzugsweise in räumlicher Nähe zueinander, beispielsweise auf demselben Betriebsgelände oder einem angrenzenden Betriebsgelände.

In einer bevorzugten Ausführungsform der vorliegenden Erfindung wird der in Verfahrensschritt b) erhaltene getrocknete Klärschlamm (tKS) weiterverarbeitet. Die Weiterverarbeitung des getrockneten Klärschlamms (tKS) kann räumlich und/oder zeitlich unabhängig von der Lagerung und/oder Weiterverarbeitung des in Verfahrensschritt a) erhaltenen, mit Wasserstoff beladenen Trägers (T2) erfolgen. Insbesondere kann die Weiterverarbeitung des getrockneten Klärschlamms (tKS) räumlich und/oder zeitlich unabhängig von der Trocknung des nassen Klärschlamms (nKS) in der Vorrichtung (V1) gemäß Verfahrensschritt b) erfolgen.

Erfindungsgemäß ist es bevorzugt, dass nach Schritt b) ein Schritt c) durchgeführt wird:
c) Verbrennen des getrockneten Klärschlamms in einer Vorrichtung (V3).

Als Vorrichtung (V3) kommen prinzipiell alle dem Fachmann bekannten Vorrichtungen infrage, mit denen getrockneter Klärschlamm verbrannt werden kann. Geeignete Vorrichtungen (V3) werden auch als Klärschlammverbrennungsanlagen bezeichnet. Die Vorrichtung (V3) umfasst mindestens eine Verbrennungseinheit sowie gegebenenfalls weitere Einheiten beispielsweise zur Zuführung und/oder Abführung von Wärme, vorzugsweise Wärmetauscher oder Heizbündel. Gegebenenfalls können in der Vorrichtung (V3) auch zwei oder mehr Verbrennungseinheiten enthalten sein, die beispielsweise parallel oder in Reihe geschaltet betrieben werden, und/oder sonstige Behältnisse, beispielsweise ein oder mehrere Vorrat-Tanks zur Lagerung von Klärschlamm-Chargen in unterschiedlichen Trockenstufen. Insbesondere umfasst die Vorrichtung (V3) Elemente zur Steuerung des Abgases (Abgasstrom), der bei der Verbrennung des getrockneten Klärschlamms entsteht. Sinngemäßes gilt auch für die bei der Klärschlammverbrennung freigesetzte Wärme.

Erfindungsgemäß ist es bevorzugt, dass in Schritt c) bei der Klärschlammverbrennung Wärme freigesetzt wird und diese freigesetzte Wärme im Rahmen des erfindungsgemäßen Verfahrens weiter verwendet wird, wobei vorzugsweise
i) die Wärme aus dem Abgas der Verbrennungsanlage abgegeben wird, und/oder
ii) zumindest eine Teilmenge der freigesetzten Wärme, vorzugsweise unter Verwendung eines Heizbündels und/oder eines Wärmetauschers, nach (dem nachfolgend definierten) Schritt e) überführt wird, um Wasserstoff aus dem Träger (T2) freizusetzen.

Die erforderlichen Vorrichtungen (V1) zur Trocknung des Klärschlamms gemäß Schritt b) sowie (V3) zur Verbrennung des getrockneten Klärschlamms gemäß Schritt c) können in der Praxis sich in räumlicher Nähe zueinander befinden, beispielsweise auf demselben Betriebsgelände, vorzugsweise befinden sich die jeweiligen Vorrichtungen jedoch in einem größeren räumlichen Abstand zueinander. Ebenso ist es bevorzugt, dass die Durchführung der beiden Schritte b) und c) zeitlich versetzt bzw. getrennt erfolgt. Ein Transport des getrockneten Klärschlamms (tKS) ist problemlos über beliebig viele Kilometer möglich, beispielsweise durch LKWs, Züge und/oder Schiffe. Eine Zwischenlagerung des getrockneten Klärschlamms (tKS) kann ebenfalls problemlos durchgeführt werden, beispielsweise in räumlicher Nähe zur Vorrichtung (V1) und/oder zur Vorrichtung (V3) bzw. entsprechende Zwischenlager können direkt in die jeweilige Vorrichtungen integriert sein. Ebenso ist es möglich, dass im Rahmen der vorliegenden Erfindung der getrocknete Klärschlamm (tKS) räumlich in großer Distanz zu den beiden Vorrichtungen (V1) und (V3) in einem geeigneten Zwischenlager, beispielsweise in einem Tank, untergebracht wird, bevor Schritt c) durchgeführt wird.

Im Rahmen der vorliegenden Erfindung ist es weiterhin bevorzugt, dass
i) vor Durchführung von Schritt c) der getrocknete Klärschlamm zwischengelagert wird, und/oder
ii) Schritt b) und Schritt c) räumlich getrennt voneinander durchgeführt werden, vorzugsweise in einer Entfernung von mindestens 5 km, insbesondere 10 bis 50 km, und/oder
iii) Schritt b) und Schritt c) zeitlich getrennt voneinander durchgeführt werden, vorzugsweise wird Schritt c) mindestens einen Monat, besonders bevorzugt mindestens drei Monate, nach Schritt b) durchgeführt.

Figur 2 zeigt eine bevorzugte Ausführungsform des erfindungsgemäßen Verfahrens unter Berücksichtigung der Schritte a), b) und c). In Zusammenhang mit der Durchführung der beiden Schritte a) und b) in Figur 2 wird zunächst auf Figur 1 sowie die zugehörigen Ausführungen verwiesen, wo das erfindungsgemäße Verfahren in seiner breitesten verdeutlicht ist. Zusätzlich zu Figur 1 ist in der bevorzugten Ausführungsform gemäß Figur 2 mitberücksichtigt, dass sich der nasse Klärschlamm (nKS) zunächst vorzugsweise in einer separaten Vorrichtung (V2) befindet, bevor er in die Vorrichtung (V1) eingespeist wird. Als Alternative zur separaten Vorrichtung (V2) kann auch ein eingerichteter Stellplatz (mit den entsprechenden Anschlüssen) eines LKWs zur just in time Anlieferung eingesetzt werden.

In Anschluss an Schritt b) wird der getrocknete Klärschlamm (tKS) in eine andere Vorrichtung (V3) transportiert und dort gemäß Schritt c) weiterverarbeitet. In der Vorrichtung (V3) erfolgt die Verbrennung des getrockneten Klärschlamms. Bei der Verbrennung des getrockneten Klärschlamms entstehen Abgase (AG), die aus der Vorrichtung (V3) ausgeleitet werden. Die bei der Verbrennung des getrockneten Klärschlamms ebenfalls entstehende Wärme wird vorzugsweise wiederverwendet, insbesondere wird die bei der Klärschlammverbrennung entstehende Wärme zur Freisetzung von Wasserstoff aus einem mit Wasserstoff beladenen Träger (T2) verwendet, was nachfolgend in Verbindung mit dem erfindungsgemäßen Schritt e) näher erläutert wird.

Die Vorrichtungen (V3) und (V1) befinden sich vorzugsweise in räumlicher Distanz zueinander, beispielsweise in einer Entfernung von 10-50 km. Letztendlich kann die räumliche Distanz zwischen den beiden Vorrichtungen (V1) und (V3) beliebig groß sein. Weiterhin werden die Schritte b) und c) vorzugsweise auch zeitlich getrennt voneinander durchgeführt, beispielsweise in einem Abstand von mindestens einem Monat, vorzugsweise von mindestens drei Monaten. Letztendlich kann der zeitliche Abstand zwischen der Durchführung dieser beiden Schritte beliebig groß sein. Gegebenenfalls kann der getrocknete Klärschlamm (tKS) in einer separaten Vorrichtung, beispielsweise in einem Zwischenlager in Form eines Tanks, aufbewahrt werden, nachdem Schritt b) beendigt ist und bevor Schritt c) durchgeführt wird.

In einer bevorzugten Ausführungsform der vorliegenden Erfindung wird in Anschluss an die Durchführung von Schritt a) sowie zeitlich unabhängig von der Durchführung des erfindungsgemäßen Schritt b) eine Lagerung des in Schritt a) erhaltenen, mit Wasserstoff beladenen Trägers (T2) durchgeführt. Die Lagerung des mit Wasserstoff beladenen Trägers (T2) kann dabei prinzipiell in der gleichen Vorrichtung durchgeführt werden, in der auch Schritt a) durchgeführt wird, beispielsweise in der Vorrichtung (V8). Vorstehend wurde bereits darauf hingewiesen, dass es im Rahmen der vorliegenden Erfindung bevorzugt ist, dass die Durchführung des Schritts a) sowie die nachfolgende Lagerung des dabei erhaltenen, mit Wasserstoff beladenen Trägers (T2) in unterschiedlichen Vorrichtungen durchgeführt werden.

Die Lagerung des mit Wasserstoff beladenen Trägers (T2) kann prinzipiell für beliebige Zeiträume stattfinden. In der Regel erfolgt die Lagerung für mindestens mehrere Tage, sie kann aber auch mehrere Wochen, Monate oder gar Jahre betragen. Genauso ist es aber auch denkbar, dass die Lagerung nur für wenige Minuten oder Stunden oder für einen Tag durchgeführt wird. Vorzugsweise erfolgt die Lagerung für mindestens zwei Tage und/oder maximal sechs Monate.

Ebenso ist es möglich, dass der mit Wasserstoff beladene Träger (T2) im Anschluss an seine Herstellung gemäß Schritt a) gar nicht in einer separaten Vorrichtung gelagert wird, sondern direkt weiterverarbeitet wird, indem er vorzugsweise zu einer geeigneten Vorrichtung zur Durchführung des nachfolgend definierten Schritts e) transportiert wird, wo der Wasserstoff aus dem Träger (T2) wieder freigesetzt wird. Vorzugsweise werden Schritt a) und Schritt e) in räumlicher Distanz zueinander durchgeführt, noch mehr bevorzugt zusätzlich mit einem zeitlichen Abstand, sodass vorzugsweise eine separate Lagerung des mit Wasserstoff beladenen Trägers im Anschluss an die Durchführung von Schritt a) erfolgt.

Vorzugsweise wird diese Ausführungsform so durchgeführt, dass der in Schritt a) erhaltene, mit Wasserstoff beladene Träger (T2) in einer Vorrichtung (V4) gelagert wird, vorzugsweise ist die Vorrichtung (V4) ausgewählt aus einem Tank, einen Fermenter oder einem Behältnis, das durch Umrüsten einer Biogasanlage, insbesondere durch Umrüstung eines Fermenters, erhalten wurde oder das Bestandteil einer Biogasanlage ist.

Als Vorrichtung (V4) kommen prinzipiell alle dem Fachmann bekannten Vorrichtungen in Frage, bevorzugt sind dabei solche Vorrichtungen, die Bestandteil einer Biogasanlage sind oder waren. Sofern eine Biogasanlage umgerüstet wird, müssen sich die entsprechenden Vorrichtungen (V4) zur Lagerung eines solchen mit Wasserstoff beladenen Trägers (T2) eignen und/oder sie müssen durch, vorzugsweise einfache, Schritte so umgerüstet werden, dass eine entsprechende Lagerung durchgeführt werden kann. Prinzipiell ist es denkbar, dass eine hierfür geeignete Vorrichtung (V4) kommerziell erworben wird und in eine bestehende Biogasanlage eingebaut wird. In anderen Worten ausgedrückt, kann bei dieser Ausführungsform eine neue Vorrichtung (V4) verwendet werden, die vorher noch nicht in einer Biogasanlage eingesetzt gewesen ist und/oder sich für die Verwendung zur Erzeugung von Biogas nicht eignet. Dies kann erfindungsgemäß insbesondere dann durchgeführt werden, wenn gemäß einer weiter unten beschriebenen bevorzugten Ausführungsform die entsprechende Biogasanlage weiterhin, beispielsweise zeitgleich (parallel) oder zeitversetzt, zur Herstellung von Biogas eingesetzt werden soll. Sofern jedoch eine entsprechende Biogasanlage nicht mehr zur Erzeugung von Biogas eingesetzt werden soll, wird erfindungsgemäß als Vorrichtung (V4) eine Vorrichtung verwendet, die bereits in der entsprechenden Biogasanlage verwendet worden ist. Die letzte Option ist selbstverständlich auch dann denkbar, wenn die entsprechende Anlage weiterhin zur Erzeugung von Biogas verwendet werden soll.

Biogasanlagen als solche sind, wie eingangs bereits erwähnt, dem Fachmann bekannt. In der Regel weisen Biogasanlagen (unter anderem) ein oder mehrere Fermenter, Vorrats- oder Lagerbehälter, Vorrichtungen zur Erzeugung von Strom, insbesondere Gasmotoren, sowie sonstige Leitungen auf. Wie vorstehend bereits erwähnt, kommen als Vorrichtung (V4) prinzipiell alle dem Fachmann bekannten Vorrichtungen in Frage, die Bestandteil einer Biogasanlage sind oder waren. Vorzugsweise handelt es sich dabei um einen Fermenter oder Nachgärer oder um Vorrichtungen, die durch Umrüstung aus einem Fermenter oder Nachgärer hergestellt worden sind. Erfindungsgemäß ist es mehr bevorzugt, dass die Vorrichtung (V4) ein Fermenter ist oder durch Umrüstung aus einem Fermenter hergestellt worden ist. Weiterhin ist es erfindungsgemäß bevorzugt, dass die Vorrichtung (V4) eine separate Vorrichtung ist gegenüber der Vorrichtung (V8), in der der erfindungsgemäße Verfahrensschritt a) durchgeführt wird.

Prinzipiell ist es denkbar, dass die Vorrichtung (V4) weiterhin als Fermenter genutzt wird. Bei dieser Fallkonstellation werden in die Vorrichtung (V4) entsprechende zusätzliche Vorrichtungsbestandteile oder Elemente eingebaut, die eine Lagerung des mit Wasserstoff beladenen Trägers (T2) in der entsprechenden Vorrichtung (V4), insbesondere in einem Fermenter, ermöglichen, ohne dass dabei der bisherige Verwendungszweck im Zusammenhang mit der Herstellung von Biogas eingestellt werden muss. Unter Umständen kann es dabei erforderlich sein, dass weitere Zuleitungen und/oder Ableitungen in die entsprechende Vorrichtung (V4), insbesondere in einen Fermenter, eingebaut werden müssen, um das Einbringen des Trägers (T2) sowie die im Anschluss an die Lagerung erforderliche Entnahme des Trägers (T2) aus der entsprechenden Vorrichtung, insbesondere dem Fermenter, zu ermöglichen.

Erfindungsgemäß ist es jedoch bevorzugt, dass die Vorrichtung (V4), insbesondere ein Fermenter, so umgebaut/umgerüstet wird, dass der bisherige Verwendungszweck im Rahmen der Biogasanlage nicht mehr durchgeführt werden kann. Im Falle eines Fermenters können beispielsweise aus der Vorrichtung (V4) die in einem Fermenter in der Regel vorhandenen Rührwerkzeuge und die damit verbundenen Bedienelemente oder Leitungen ausgebaut werden. Gegebenenfalls vorhandene Heizelemente können hingegen in der entsprechenden Vorrichtung (V4) ohne Probleme belassen werden, da sie auch im Zusammenhang mit der Lagerung des mit Wasserstoff beladenen Trägers (T2) sinnvoll verwendet werden können. Gegebenenfalls können die entsprechenden bisher vorhandenen Zuführ- und/oder Entnahmeelemente in der entsprechenden Vorrichtung (V4) zu den für das erfindungsgemäße Verfahren erforderlichen Zwecken umgerüstet werden oder gegebenenfalls ohne Umrüstung eingesetzt werden.

Vorzugsweise weist die Vorrichtung (V4) zwei räumlich getrennte Bereiche auf, wobei ein erster Bereich zur Lagerung des mit Wasserstoff beladenen Trägers (T2) verwendet wird und ein zweiter Bereich zur Lagerung des Trägers (T1) verwendet wird.

Weiterhin ist es bevorzugt, dass die Vorrichtung (V4) in ihrem Inneren mit einer Schutzauskleidung versehen wird, bevor die Lagerung des Trägers (T1) durchgeführt wird. Solche Schutzauskleidungen sind beispielsweise in EP-A 3 415 609 im Rahmen des dortigen optionalen Verfahrensschrittes g) beschrieben.

Weiterhin ist es bevorzugt, dass in die Vorrichtung (V4) eine schwimmende Trennwand eingebaut ist, wodurch der Träger (T1) getrennt von dem mit Wasserstoff beladenen Träger (T2) gelagert wird. Beispielsweise kann der Träger (T1) oberhalb und der Träger (T2) unterhalb der schwimmenden Trennwand gelagert werden.

Weiterhin ist es bevorzugt, dass die Vorrichtung (V4) Bestandteil einer Biogasanlage war und von allen Substanzen gereinigt war, die sich infolge der Erzeugung von Biogas in ihrem Inneren oder gegebenenfalls in ihren Zuleitungen befunden haben, bevor die Lagerung des Trägers (T1) durchgeführt wird. Des Weiteren kann die Vorrichtung (V4) auch einem zusätzlichen Reinigungsschritt unterzogen werden, wie er in EP-A 3 415 609 als dortiger optionaler Reinigungsschritt f) beschrieben ist.

Erfindungsgemäß ist es bevorzugt, dass die Vorrichtung (V4) sich in räumlicher Nähe zu der in Schritt a) eingesetzten Vorrichtung (V8) befindet, sofern für die Durchführung des Schritts a) und die Lagerung des dabei erhaltenen Trägers (T2) jeweils eine separate Vorrichtung verwendet wird, insbesondere befinden sich die entsprechenden Vorrichtungen auf demselben Betriebsgelände. Sinngemäßes gilt auch für eine etwaige separate Vorrichtung (V5), die wie nachfolgend ausgeführt für die Lagerung des in Schritt e) wiedergewonnenen Trägers (T1) verwendet werden kann.

In einer anderen Ausführungsform ist es bevorzugt, dass die Vorrichtung (V4) sich in räumlicher Nähe zu der im weiter unten beschriebenen Schritt e) eingesetzten Vorrichtung (V7) befindet, insbesondere befinden sich die entsprechenden Vorrichtungen auf demselben Betriebsgelände. Sinngemäßes gilt auch für eine etwaige separate Vorrichtung (V5), die wie nachfolgend ausgeführt für die Lagerung des in Schritt e) wiedergewonnenen Trägers (T1) verwendet werden kann.

Im erfindungsgemäßen Verfahren ist es bevorzugt, dass vor Schritt a) ein Schritt d) durchgeführt wird. Gemäß des optionalen erfindungsgemäßen Schritts d) erfolgt die Erzeugung von Wasserstoff in einer Vorrichtung (V6), vorzugsweise in einem Elektrolyseur, unter Verwendung von Wasser und elektrischem Strom. Die Durchführung des Verfahrensschritts d) als solchem ist dem Fachmann bekannt. Geeignete Elektolyseure sind beispielsweise in DE-B 10 2013 223 589 oder DE-A 10 2012 005 023 beschrieben. Hierbei kann es sich beispielsweise um einen sogenannten PEM-Elektrolyseur (Polymerelektrolytmembran) oder um einen SOEC-Elektrolyseur (solid oxide electolysis cell) sowie um einen Hochtemperatur-Elektrolyseur handeln. Letztendlich ist als Vorrichtung (V6) jede Art von Vorrichtung geeignet, in der die Zerlegung von Wasser in Wasserstoff oder Sauerstoff bei gleichzeitiger Einspeisung von elektrischem Strom durchgeführt werden kann. In der Vorrichtung (V6) sind in der Regel zwei Elektroden vorhanden. Bei dem eingesetzten Wasser handelt es sich normalerweise um VE-Wasser (vollentsalztes Wasser; siehe beispielsweise Siemens Silyzer-Broschüre).

Der in Schritt d) verwendete elektrische Strom kann prinzipiell aus beliebigen Quellen stammen. So ist es denkbar, dass der elektrische Strom einem separaten Netz (Verbrauchernetz) entnommen wird. Vorzugsweise handelt es sich jedoch bei dem eingesetzten Strom gemäß Schritt d) um regenerativ hergestellten elektrischen Strom (Elektrizität). Dieser regenerativ hergestellte elektrische Strom wird vorzugsweise direkt oder in unmittelbarer Nähe der Durchführung des erfindungsgemäßen Verfahrens erzeugt. Der elektrische Strom kann beispielsweise aus Wasserkraft, Windenergie, solarer Strahlung (Sonnenenergie), Erdwärme (Geothermie), Biogas, Bioethanol, Holz oder durch die Gezeiten gewonnen werden. Die zur Gewinnung des elektrischen Stroms notwendigen Maschinen und Apparate sind ebenfalls bekannt. Es kann sich dabei um Wasserturbinen, Windanlagen, Fotovoltaik, Solarthermie, Verbrennungsmaschinen oder Turbinen, bei deren Brennstoff es sich um Biomasse handelt, stammen. Vorzugsweise wird der in Schritt d) des erfindungsgemäßen Verfahrens eingesetzte elektrische Strom durch Wasserkraft, Windenergie oder solare Strahlung erzeugt. Da dieser elektrische Strom prinzipiell auch aus von nachwachsenden Rohstoffen gewonnener Biomasse, insbesondere Biogas, stammen kann, ist es auch denkbar, dass das in einer Ausführungsform der vorliegenden Erfindung parallel oder zeitversetzt hergestellte Biogas in einem nachfolgenden Schritt verstromt wird und dieser Strom, für den aktuell keine Verwendung besteht, im Rahmen des erfindungsgemäßen Verfahrens in Wasserstoff umgewandelt wird, der erfindungsgemäß gespeichert und gelagert wird.

Wie vorstehend bereits erwähnt, wird in Schritt d) (in der Regel) neben Wasserstoff zusätzlich Sauerstoff erzeugt. Vorzugsweise wird in Schritt d) zusätzlich Sauerstoff erzeugt und dieser Sauerstoff wird in der (nachfolgend definierten) Vorrichtung (V9) gemäß Schritt f) gemeinsam mit Wasserstoff in elektrischen Strom und gegebenenfalls Wärme umgewandelt, wobei der Sauerstoff vor seiner Verwendung in Schritt f) gegebenenfalls zwischengespeichert wird. Vorrichtungen zum Zwischenspeichern von Sauerstoff sind dem Fachmann bekannt.

Weiterhin ist es bevorzugt, dass im erfindungsgemäßen Verfahren nach Schritt a) oder vorzugsweise im Anschluss an die Lagerung des mit Wasserstoff beladenen Trägers (T2) ein Schritt e) durchgeführt, wobei gemäß dem optionalen Verfahrensschritt e) die Freisetzung von Wasserstoff aus dem mit Wasserstoff beladenen Träger (T2) erfolgt.

Prinzipiell ist es möglich, dass der optionale Verfahrensschritt e) ebenfalls in der Vorrichtung (V8) und/oder in der Vorrichtung (V4) durchgeführt wird. Vorzugsweise wird der Verfahrensschritt e) in einer separaten Vorrichtung (V7) durchgeführt, die insbesondere ein chemischer Reaktor ist. Die erfindungsgemäßen Verfahrensschritte a) und e) sowie die gegebenenfalls zwischengeschaltete Lagerung des mit Wasserstoff beladenen Trägers (T2) werden also vorzugsweise jeweils in separaten Vorrichtungen durchgeführt. Prinzipiell ist es möglich, dass die Vorrichtung (V7) zur Durchführung des Schritts e) in einer von der Art her gleichen Vorrichtung durchgeführt wird wie die Vorrichtung (V8) zur Durchführung des erfindungsgemäßen Verfahrensschritts a). Geeignete Vorrichtungen zur Durchführung des erfindungsgemäßen Verfahrensschritts e) sind beispielsweise in DE-B 10 2013 223 589 offenbart.

Das Freisetzen des Wasserstoffs gemäß Verfahrensschritt e) erfolgt vorzugsweise in einem druckstabilen chemischen Reaktor bei einer Prozesstemperatur zwischen 100°C und 450°C, bevorzugt zwischen 150°C und 420°C und insbesondere zwischen 180°C und 390°C. Der Prozessdruck liegt zwischen 0,1 und 30 bar, insbesondere zwischen 1 und 10 bar, wobei insbesondere ein metallhaltiger Katalysator eingesetzt werden kann, der insbesondere Platin und/oder Palladium enthält. Wesentlich ist, dass der Katalysator geeignet ist, Wasserstoff, der vom LOHC-Träger (T2) abgegeben wird, als Wasserstoffgas freizusetzen. Neben Platin und/oder Palladium sind dafür insbesondere Metalle, wie Chrom, Eisen, Kobalt, Nickel, Kupfer, Iridium oder Ruthenium, geeignet.

Weiterhin ist es bevorzugt, dass bei der Freisetzung von Wasserstoff gemäß Schritt e) zusätzlich der Träger (T1) wiedergewonnen wird.

Weiterhin ist es bevorzugt, dass bei der Freisetzung von Wasserstoff gemäß Schritt e) zusätzlich der Träger (T1) wiedergewonnen wird und der Träger (T1) erneut zur Durchführung von Schritt a) verwendet wird.

Weiterhin ist es bevorzugt, dass bei der Freisetzung von Wasserstoff gemäß Schritt e) zusätzlich der Träger (T1) wiedergewonnen wird und anschließend der Träger (T1) in einer separaten Vorrichtung (V5) oder in der Vorrichtung (V4) gelagert wird. Im Anschluss an eine Lagerung, beispielsweise in der Vorrichtung (V5), wird der Träger (T1) vorzugsweise erneut zur Durchführung von Schritt a) verwendet.

Die Vorrichtung (V4) dient vordergründig zur Lagerung des mit Wasserstoff beladenen Trägers (T2). Wie vorstehend bereits erwähnt ist es jedoch problemlos möglich, dass sowohl der Träger (T1) als auch der mit Wasserstoff beladenen Träger (T2) getrennt voneinander in der gleichen Vorrichtung, insbesondere einer Vorrichtung (V4) gelagert werden können. Sofern die Lagerung des Trägers (T1) in einer separaten Vorrichtung (V5) erfolgt, ist die Vorrichtung (V5) von ihrer Art her prinzipiell gleich wie die vorstehend beschriebene Vorrichtung (V4). Die Art und/oder Dauer der Lagerung des Trägers (T1) kann sinngemäß durchgeführt werden wie vorstehend für die Lagerung des mit Wasserstoff beladenen Trägers (T2) in der Vorrichtung (V5) beschrieben.

Vorzugsweise wird der erfindungsgemäße Schritt e) räumlich getrennt und/oder zeitlich getrennt von den vorstehend beschriebenen Schritten a) und/oder b) durchgeführt, vorzugsweise in einer Entfernung von mindestens 5 km, insbesondere 10 bis 50 km, und/oder Schritt e) wird mindestens einen Monat, besonders bevorzugt mindestens drei Monate, nach den vorstehend beschriebenen Schritten a) und/oder b) durchgeführt. Gegebenenfalls kann der Schritt e) aber auch in räumlicher Nähe und/oder in direkter zeitlicher Abfolge zu Schritt a) durchgeführt werden.

In einer Ausführungsform umfasst das erfindungsgemäße Verfahren die Schritte a), b) und e). Bei dieser Ausführungsform wird der optionale Schritt c) nicht durchgeführt. In einer anderen bevorzugten Ausführungsform umfasst das erfindungsgemäße Verfahren die Schritte a), b) und e) sowie zusätzlich den Schritt c) sowie gegebenenfalls den nachfolgend definierten Schritt f). In dieser Ausführungsform werden die erfindungsgemäßen Schritte c) und e) vorzugsweise in räumlicher und/oder zeitlicher Nähe voneinander durchgeführt, während sie hingegen wie im letzten Absatz beschrieben vorzugsweise räumlich und/oder zeitlich getrennt von den Schritten a) und/oder b) durchgeführt werden. Eine räumliche und/oder zeitliche Nähe zwischen der Durchführung der beiden Verfahrensschritte e) und c) ist insbesondere dann vorteilhaft, wenn (wie nachfolgend ausgeführt) ein Wärmetransfer zwischen diesen beiden Schritten stattfindet.

In einer besonders bevorzugten Ausführungsform der vorliegenden Erfindung wird die Freisetzung von Wasserstoff aus dem mit Wasserstoff beladenen Träger (T2) gemäß Schritt e) so durchgeführt, dass zumindest eine Teilmenge der für die endotherme Wasserstofffreisetzung benötigten Energie in Form von Wärme bereitgestellt wird, die aus der Klärschlammverbrennung gemäß Schritt c) stammt. Vorzugsweise stammt mindestens 50 %, mehr bevorzugt mindestens 75 %, der für die Wasserstofffreisetzung in Schritt e) benötigten Energie aus der in Schritt c) gewonnenen Wärme.

Ebenso ist es bevorzugt, dass zumindest eine Teilmenge der für die Wasserstofffreisetzung in Schritt e) benötigten Energie in Form von Wärme bereitgestellt wird, die bei der nachfolgend beschriebenen optionalen Stromerzeugung gemäß Schritt f) zusätzlich gewonnen und die nach Schritt e) rückgeleitet wird. Die in den beiden Schritte c) und f) jeweils anfallende Wärme können entweder vollkommen unabhängig voneinander oder gemeinsam/zeitgleich als Energiequelle für die Freisetzung von Wasserstoff gemäß Schritt e) verwendet werden.

Weiterhin ist es erfindungsgemäß bevorzugt, dass nach Schritt e) ein optionaler Verfahrensschritt f) durchgeführt wird, wobei in Schritt f) die Überführung des in Schritt e) erhaltenen Wasserstoffs in eine Vorrichtung (V9) erfolgt, wobei in der Vorrichtung (V9) Wasserstoff in elektrischen Strom und gegebenenfalls in Wärme umgewandelt wird. Der in Schritt e) freigesetzte Wasserstoff kann zwar problemlos gelagert oder transportiert werden, vorzugsweise wird der optionale Schritt f) jedoch in räumlicher und/oder zeitlicher Nähe zu Schritt e) durchgeführt.

Die Vorrichtung (V9) als solche ist dem Fachmann bekannt. Vorzugsweise ist die Vorrichtung (V9) Bestandteil eines Blockheizkraftwerkes, ein Gasmotor, eine Brennstoffzelle, ein Verbrennungsmotor, ein Verbrennungsmotor mit angeschlossenem Generator, eine Turbine oder eine Wasserstoffturbine mit angeschlossenem Generator, vorzugsweise ein Gasmotor.

Die vorgenannten Vorrichtungen (V9) sind häufig bereits in einer konventionellen Biogasanlage enthalten und können in aller Regel ohne größere Umrüstungen im erfindungsgemäßen Verfahren eingesetzt werden. Dies trifft insbesondere für ein Blockheizkraftwerk und/oder einen Gasmotor zu, die häufig in Biogasanlagen verwendet werden. Weiterhin ist es bevorzugt, dass die gegebenenfalls in Schritt f) erzeugte Wärme nach Schritt e) zurückgeleitet wird.

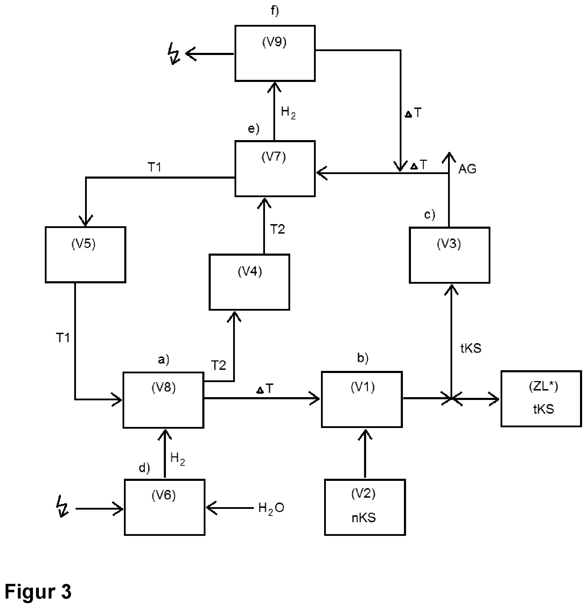

Figur 3 zeigt eine besonders bevorzugte Ausführungsform des erfindungsgemäßen Verfahrens unter Berücksichtigung der vorstehend beschriebenen Schritte a), b), c), d), e) und f). In Zusammenhang mit der Durchführung der beiden Schritte a), b) und c) in Figur 3 wird zunächst auf die beiden Figuren 1 und 2 sowie die zugehörigen Ausführungen verwiesen. Zur Durchführung der jeweiligen Schritte d), e) und f) wird auf die vorstehende Beschreibung verwiesen. Die Schritte d) und/oder f) können in dieser Ausführungsform gegebenenfalls auch weggelassen werden, vorzugsweise werden aber beide Schritte d) und f) durchgeführt.

Zusätzlich zu Figur 2 ist in der besonders bevorzugten Ausführungsform gemäß Figur 3 mitberücksichtigt, dass der getrocknete Klärschlamm (tKS) vorzugsweise in einer separaten Vorrichtung (ZL*), beispielsweise in einem Zwischenlager in Form eines Tanks, aufbewahrt werden kann, nachdem Schritt b) beendigt ist und bevor Schritt c) durchgeführt wird. Der Einsatz einer solchen separaten Vorrichtung (ZL*) ist jedoch auch in dieser besonders bevorzugten Ausführungsform nicht zwingend, sondern optional. Der Einsatz einer solchen separaten Vorrichtung (ZL*) bietet sich insbesondere dann an, sofern ein längerer Zeitraum zwischen der Durchführung der beiden Verfahrensschritte b) und c) liegt und/oder eine sehr große Menge an getrocknetem Klärschlamm (tKS) in Schritt c) verbrannt werden soll, was aus Kapazitätsgründen in der Vorrichtung (V3) einen erhöhten Lagebedarf erfordert.

In dieser Ausführungsform findet zusätzlich eine Lagerung des mit Wasserstoff beladenen Trägers (T2) in einer Vorrichtung (V4) sowie eine Lagerung des zurückgewonnenen Trägers (T1) in einer separaten Vorrichtung (V5) statt. Die jeweiligen Lagerungen können zeitversetzt oder (zumindest teilweise) überschneidend durchgeführt werden, alternativ ist auch eine Lagerung der Träger (T1) und (T2) in einer einzigen Vorrichtung (V4) denkbar.

Gegebenenfalls kann auf die jeweiligen Lagerungen, insbesondere in den Vorrichtungen (V4) und/oder (V5), ganz oder zumindest teilweise auch verzichtet werden. Bei dieser Fallkonstellation würde beispielsweise der Schritt e) (relativ direkt) im Anschluss an die Durchführung von Schritt a) erfolgen und/oder der Schritt a) (relativ direkt) im Anschluss an die Durchführung von Schritt e) erfolgen. Sofern eine räumliche Distanz zwischen den Vorrichtungen (V8) einerseits und (V7) andererseits vorhanden ist, muss die Zeit für den benötigten Transport beispielsweise des mit Wasserstoff beladenen Trägers (T2) mitberücksichtigt werden, so dass Schritt e) erst mit einer zeitlichen Verzögerung durchgeführt werden kann. Ebenso kann der Transport des mit Wasserstoff beladenen Trägers (T2) in einer geeigneten Transportvorrichtung, beispielsweise ein Lkw oder ein Eisenbahn-Tankwagen, mit einer Zwischenlagerung des mit Wasserstoff beladenen Trägers (T2) verknüpft werden, indem die entsprechende Transportvorrichtung, die mit dem Träger (T2) beladen ist, für einen bestimmten Zeitraum abgestellt wird. Sinngemäßes gilt selbstverständlich für die Rücküberführung des wiedergewonnenen Trägers (T1) aus Schritt e) nach Schritt a).

Ebenso ist es im Rahmen der vorliegenden Erfindung möglich, dass beispielsweise bei mindestens einfachem durchlaufen des Zyklus bezüglich der Schritte a), b) und e) sowie gegebenenfalls der Schritte c), d) und/oder f) die Durchführung der entsprechend mehrfach durchgeführten Schritte in unterschiedlichen Vorrichtungen erfolgt. Beispielsweise wird Wasserstoff gemäß Schritt a) in einer ersten Vorrichtung (V8) mit einem Träger (T1) in Kontakt gebracht, weil an einem ersten Standort Klärschlamm gemäß Schritt b) getrocknet werden soll. Der in Schritt a) erhaltene mit Wasserstoff beladene Träger (T2) wird anschließend nach gegebenenfalls erfolgter Zwischenlagerung in eine Vorrichtung (V7) überführt, um dort Wasserstoff aus dem Träger (T2) gemäß Schritt e) freizusetzen. Die Freisetzung des Wasserstoffs gemäß Schritt e) bzw. die gegebenenfalls vorausgegangene Lagerung des Trägers (T2) kann dabei zeitlich vollkommen unabhängig von der Durchführung der Klärschlammtrocknung gemäß Schritt b) erfolgen. Der in Schritt e) freigesetzte Träger (T1) wird nach gegebenenfalls erfolgter Zwischenlagerung in eine zweite Vorrichtung (V8) überführt, um dort gemäß Schritt a) den Träger (T1) wieder mit Wasserstoff und Erhalt des Trägers (T2) zu beladen. Allerdings befindet sich die zweite Vorrichtung (V8) an einem anderen Ort als die erste Vorrichtung (V8), weil an einem anderen Standort Bedarf zur Trocknung von Klärschlamm gemäß Schritt b) besteht. Diese Standortunabhängige Durchführung der einzelnen Verfahrensschritte gilt selbstverständlich für alle anderen Schritte/Vorrichtungen des erfindungsgemäßen Verfahrens sinngemäß.

Die Vorrichtungen (V7) und (V3) einerseits sowie (V8) und (V1) andererseits befinden sich vorzugsweise in räumlicher Distanz zueinander, beispielsweise in einer Entfernung von 10-50 km. Weiterhin werden die Schritte b) und c) und/oder die Schritte a) und e) vorzugsweise auch zeitlich getrennt voneinander durchgeführt, beispielsweise in einem Abstand von mindestens einem Monat, vorzugsweise von mindestens drei Monaten. Im Gegensatz dazu ist es in dieser Ausführungsform bevorzugt, dass sich die Vorrichtungen (V7) und (V3) und/oder Vorrichtungen (V8) und (V1) in räumlicher Nähe zueinander befinden, beispielsweise auf demselben Betriebsgelände. Ebenso werden die Schritte a) und b) einerseits und/oder die Schritte c) und e) andererseits in zeitlicher Nähe zueinander, vorzugsweise parallel, durchgeführt.

In einer weiteren bevorzugten Ausführungsform der vorliegenden Erfindung wird das Verfahren in einer Anlage durchgeführt, die weiterhin zur Erzeugung von Biogas eingesetzt werden kann. Die Erzeugung von Biogas kann dabei parallel oder zeitversetzt zum erfindungsgemäßen Verfahren zum Trocknen von Klärschlamm bzw. bei der gegebenenfalls nachfolgend durchgeführten Freisetzung von Wasserstoff und der damit verbundenen Erzeugung von elektrischem Strom und gegebenenfalls von Wärme durchgeführt werden. Ebenso ist es denkbar, dass die Erzeugung von Biogas nur für ein bestimmtes Zeitintervall parallel zum Verfahren zum Trocknen von Klärschlamm durchgeführt wird.

Vorzugsweise werden die Erzeugung von Biogas einerseits und das Trocknen von Klärschlamm oder die Erzeugung von elektrischem Strom sowie gegebenenfalls von Wärme andererseits parallel auf derselben Anlage durchgeführt.

Weiterhin ist es bevorzugt, dass die Erzeugung von Biogas in einem separaten Fermenter durchgeführt wird, der nicht Bestandteil der Vorrichtung (V4) zur Lagerung des mit Wasserstoff beladenen Trägers (T2) ist.

Weiterhin ist es bevorzugt, dass der in Schritt d) erzeugte Wasserstoff teilweise und/oder für eine bestimmte Zeitspanne zur Erzeugung von Biogas, insbesondere zur Methanisierung, eingesetzt wird, wobei der Wasserstoff vorzugsweise in einen separaten Fermenter eingeleitet wird und dort mit CO₂ abreagiert.

Weiterhin ist es bevorzugt, dass der in Schritt e) freigesetzte Wasserstoff teilweise und/oder für eine bestimmte Zeitspanne zur Erzeugung von Biogas, insbesondere zur Methanisierung, eingesetzt wird, wobei der Wasserstoff vorzugsweise in einen separaten Fermenter eingeleitet wird und dort mit CO₂ abreagiert.

Weiterhin ist es bevorzugt, dass der in Schritt d) zusätzlich erzeugte Sauerstoff teilweise und/oder für eine bestimmte Zeitspanne zur Erzeugung von Biogas eingesetzt wird, wobei der Sauerstoff vorzugsweise in einen separaten Fermenter oder Nachgärer eingeleitet wird. Diese Ausführungsform ist deswegen vorteilhaft, weil der bei der Elektrolyse freiwerdende Sauerstoff einem Biogasprozess im Normalbetrieb zugegeben werden kann, um die Qualität des Biogases zu erhöhen. Die Zugabe von Sauerstoff anstelle von Umgebungsluft zur Belüftung des Gärprozesses vermeidet einen erhöhten Stickstoffgehalt im später erhaltenen Biogas.

Weiterhin ist es bevorzugt, dass erzeugtes Biogas, insbesondere Methan, und in den Schritten d) und/oder e) erzeugter oder freigesetzter Wasserstoff miteinander vermischt werden, um sie gemeinsam nach Schritt f) in die Vorrichtung (V9) zu überführen, wo sie in elektrischen Strom und gegebenenfalls in Wärme umgewandelt werden.

Die in den vorgenannten Optionen erwähnten Zeitspannen sind prinzipiell beliebig. Es kann sich dabei um eine oder mehrere Stunden, einen oder mehrere Tage oder sogar um noch längere Zeiträume, wie Wochen und Monate, handeln. Dies hängt ganz vom jeweiligen Bedarf der Erzeugung von Biogas, der Speicherung von Wasserstoff und/oder der Erzeugung von elektrischem Strom ab.

## Patentansprüche

1. Verfahren zur Trocknung von Klärschlamm umfassend die nachfolgenden Schritte a) und b):
a) Inkontaktbringen eines Trägers (T1) mit Wasserstoff zur Speicherung des Wasserstoffs unter Erhalt eines mit Wasserstoff beladenen Trägers (T2) sowie Freisetzung von Wärme,
b) Einspeisung der in Schritt a) freigesetzten Wärme in eine Vorrichtung (V1), um in der Vorrichtung (V1) Klärschlamm zu trocknen.

2. Verfahren gemäß Anspruch 1, **dadurch gekennzeichnet, dass** in Schritt b)
i) die Vorrichtung (V1) mindestens einen Klärschlammtrockner umfasst, vorzugsweise ausgewählt aus einem Bandtrockner, einem Trommeltrockner oder einem Scheibentrockner, und/oder
ii) die in Schritt a) freigesetzte Wärme über eine Rohrleitung oder ein Rohrleitungssystem in die Vorrichtung (V1) geleitet wird, und/oder
iii) die in Schritt a) freigesetzte Wärme durch einen Wärmetauscher geleitet wird, um die Trocknungsluft in der Vorrichtung (V1), insbesondere in einem Bandtrockner, aufzuheizen, und/oder
iv) die Vorrichtung (V1) mindestens zwei Bereiche mit unterschiedlichen Temperaturzonen aufweist.

3. Verfahren gemäß Anspruch 1 oder 2, **dadurch gekennzeichnet, dass**
i) Schritt a) und Schritt b) in räumlicher Nähe durchgeführt werden, vorzugsweise befinden sich die jeweiligen Vorrichtungen zur Durchführung der beiden Schritte a) und b) auf demselben Betriebsgelände, und/oder
ii) die Vorrichtung (V1) umfasst a) eine Niedertemperaturzone (Z1), die bei einem Temperaturniveau von 50 bis 90 °C, vorzugsweise bei 60 bis 80 °C, insbesondere bei 70 °C, betrieben wird, und b) eine Hochtemperaturzone (Z2), die bei einem Temperaturniveau von 100 bis 180 °C, vorzugsweise bei 130 bis 150 °C, insbesondere bei 140 °C, betrieben wird, und/oder
iii) der Klärschlamm in der Vorrichtung (V1) bis zu einem Trocknungsgrad von mindestens 75 %, vorzugsweise bei mindestens 85 %, insbesondere bei 95 bis 100 % (Volltrocknung) getrocknet wird.

4. Verfahren gemäß einem der Ansprüche 1 bis 3, **dadurch gekennzeichnet, dass**
i) der Klärschlamm zunächst entwässert wird und mit einem Trocknungsgrad von 20 bis 30 % vorliegt, bevor er in die Vorrichtung (V1) zur Trocknung eingespeist wird, und/oder
ii) der Klärschlamm mit einer Dickstoffpumpe in die Vorrichtung (V1) zur Trocknung eingespeist wird, und/oder
iii) der Klärschlamm vor der Trocknung in der Vorrichtung (V1) in einer Vorrichtung (V2) gelagert wird, vorzugsweise ist die Vorrichtung (V2) ausgewählt aus einem Tank, einen Fermenter oder einem Behältnis, das durch Umrüsten einer Biogasanlage, insbesondere durch Umrüstung eines Fermenters, erhalten wurde oder das Bestandteil einer Biogasanlage ist.

5. Verfahren gemäß einem der Ansprüche 1 bis 4, **dadurch gekennzeichnet, dass** nach Schritt b) ein Schritt c) durchgeführt wird:
c) Verbrennen des getrockneten Klärschlamms in einer Vorrichtung (V3).

6. Verfahren gemäß einem der Ansprüche 1 bis 5, **dadurch gekennzeichnet, dass**
i) vor Durchführung von Schritt c) der getrocknete Klärschlamm zwischengelagert wird, und/oder
ii) Schritt b) und Schritt c) räumlich getrennt voneinander durchgeführt werden, vorzugsweise in einer Entfernung von mindestens 5 km, insbesondere 10 bis 50 km, und/oder
iii) Schritt b) und Schritt c) zeitlich getrennt voneinander durchgeführt werden, vorzugsweise wird Schritt c) mindestens einen Monat, besonders bevorzugt mindestens drei Monate, nach Schritt b) durchgeführt.

7. Verfahren gemäß einem der Ansprüche1 bis 6, **dadurch gekennzeichnet, dass**
i) der in Schritt a) erhaltene, mit Wasserstoff beladene Träger (T2) in einer Vorrichtung (V4) gelagert wird, vorzugsweise ist die Vorrichtung (V4) ausgewählt aus einem Tank, einen Fermenter oder einem Behältnis, das durch Umrüsten einer Biogasanlage, insbesondere durch Umrüstung eines Fermenters, erhalten wurde oder das Bestandteil einer Biogasanlage ist, und/oder
ii) in Schritt a) Wasserstoff chemisch oder physisorptiv, vorzugsweise chemisch, an den Träger (T1) gebunden wird, und/oder
iii) der Träger (T1) eine ungesättigte Verbindung, bevorzugt eine Verbindung mit mindestens einer Kohlenstoff-Kohlenstoff-Doppelbindung, mehr bevorzugt eine aromatische oder hetero-aromatische Verbindung, noch mehr bevorzugt ein N-Alkylcarbazol, Toluol, Dibenzyltoluol, Benzyltoluol, Naphthalin oder ein Azaborin, besonders bevorzugt Dibenzyltoluol, ist, und/oder
iv) in Schritt a) der mit Wasserstoff beladene Träger (T2) durch zumindest teilweise oder vollständige Hydrierung, vorzugsweise durch vollständige Hydrierung, mit Wasserstoff aus dem Träger (T1) erhalten wird.

8. Verfahren gemäß einem der Ansprüche 1 bis 7, **dadurch gekennzeichnet, dass** vor Schritt a) ein Schritt d) durchgeführt wird:
d) Erzeugung von Wasserstoff in einer Vorrichtung (V6), vorzugsweise in einem Elektrolyseur, unter Verwendung von Wasser und elektrischem Strom.

9. Verfahren gemäß einem der Ansprüche 1 bis 8, **dadurch gekennzeichnet, dass** nach Schritt a) ein Schritt e) durchgeführt wird:
e) Freisetzung von Wasserstoff aus dem mit Wasserstoff beladenen Träger (T2).

10. Verfahren gemäß Anspruch 9, **dadurch gekennzeichnet, dass** nach Schritt e) ein Schritt f) durchgeführt wird:
f) Überführung des in Schritt e) erhaltenen Wasserstoffs in eine Vorrichtung (V9), wobei in der Vorrichtung (V9) Wasserstoff in elektrischen Strom und gegebenenfalls in Wärme umgewandelt wird.

11. Verfahren gemäß Anspruch 10, **dadurch gekennzeichnet, dass**
i) die Vorrichtung (V9) Bestandteil eines Blockheizkraftwerkes, ein Gasmotor, eine Brennstoffzelle, ein Verbrennungsmotor, ein Verbrennungsmotor mit angeschlossenem Generator, eine Turbine oder eine Wasserstoffturbine mit angeschlossenem Generator, vorzugsweise ein Gasmotor, ist, und/oder
ii) die gegebenenfalls in Schritt f) erzeugte Wärme nach Schritt e) zurückgeleitet wird.

12. Verfahren gemäß einem der Ansprüche 3 bis 11, **dadurch gekennzeichnet, dass** in Schritt c) bei der Klärschlammverbrennung Wärme freigesetzt wird, wobei vorzugsweise
i) die Wärme aus dem Abgas der Verbrennungsanlage abgegeben wird, und/oder
ii) zumindest eine Teilmenge der freigesetzten Wärme, vorzugsweise unter Verwendung eines Heizbündels und/oder eines Wärmetauschers, nach Schritt e) überführt wird, um Wasserstoff aus dem Träger (T2) freizusetzen.

13. Verfahren gemäß einem der Ansprüche 9 bis 12, **dadurch gekennzeichnet, dass**
i) bei der Freisetzung von Wasserstoff gemäß Schritt e) zusätzlich der Träger (T1) wiedergewonnen wird, und/oder
ii) bei der Freisetzung von Wasserstoff gemäß Schritt e) zusätzlich der Träger (T1) wiedergewonnen wird und der Träger (T1) erneut zur Durchführung von Schritt a) verwendet wird, und/oder
iii) bei der Freisetzung von Wasserstoff gemäß Schritt e) zusätzlich der Träger (T1) wiedergewonnen wird und anschließend der Träger (T1) in einer separaten Vorrichtung (V5) oder in der Vorrichtung (V4) gelagert wird, und/oder
iv) Schritt e) in einer separaten Vorrichtung (V7) durchgeführt wird, die vorzugsweise ein chemischer Reaktor ist.

14. Verfahren gemäß einem der Ansprüche 1 bis 13, **dadurch gekennzeichnet, dass**
i) Schritt a) in einer separaten Vorrichtung (V8) durchgeführt wird, die vorzugsweise ein chemischer Reaktor ist, und/oder
ii) die Vorrichtung (V4) zwei räumlich getrennte Bereiche aufweist, wobei ein erster Bereich zur Lagerung des mit Wasserstoff beladenen Trägers (T2) verwendet wird und ein zweiter Bereich zur Lagerung des Trägers (T1) verwendet wird, und/oder
iii) die Vorrichtung (V4) in ihrem Inneren mit einer Schutzauskleidung versehen wird, bevor die Lagerung des Trägers (T2) und gegebenenfalls des Trägers (T1) durchgeführt wird, und/oder
iv) in die Vorrichtung (V4) eine schwimmende Trennwand eingebaut ist, wodurch der Träger (T1) getrennt von dem mit Wasserstoff beladenen Träger (T2) gelagert wird, und/oder
v) die Vorrichtung (V4) Bestandteil einer Biogasanlage war und von allen Substanzen gereinigt war, die sich infolge der Erzeugung von Biogas in ihrem Inneren oder gegebenenfalls in ihren Zuleitungen befunden haben, bevor die Lagerung des Trägers (T2) und gegebenenfalls des Trägers (T1) durchgeführt wird.

15. Verfahren gemäß einem der Ansprüche 1 bis 14, **dadurch gekennzeichnet, dass** das Verfahren in einer Anlage durchgeführt wird, die weiterhin zur Erzeugung von Biogas eingesetzt werden kann.

16. Verfahren gemäß Anspruch 15, **dadurch gekennzeichnet, dass**
i) die Erzeugung von Biogas einerseits und das Speichern und Lagern von Wasserstoff oder die Erzeugung von elektrischem Strom sowie gegebenenfalls von Wärme andererseits parallel auf derselben Anlage durchgeführt werden, und/oder
ii) die Erzeugung von Biogas in einem separaten Fermenter durchgeführt wird, der nicht Bestandteil der Vorrichtung (V4) zur Lagerung des mit Wasserstoff beladenen Trägers (T2) ist.
